(19) **Europäisches Patentamt / European Patent Office / Office européen des brevets**

(11) **EP 3 996 116 B1**

(12) **FASCICULE DE BREVET EUROPEEN**

(45) Date de publication et mention
de la délivrance du brevet:
**13.03.2024 Bulletin 2024/11**

(21) Numéro de dépôt: **21206574.2**

(22) Date de dépôt: **04.11.2021**

(51) Classification Internationale des Brevets (IPC):
***H01F 1/00*** *(2006.01)*    *H01F 1/11* *(2006.01)*

(52) Classification Coopérative des Brevets (CPC):
**H01F 1/0054;** H01F 1/11

(54) **PROCÉDÉ DE PRODUCTION DE NANOCOMPOSITES MAGNÉTIQUES ET NANOCOMPOSITES MAGNÉTIQUES OBTENUS**

VERFAHREN ZUR HERSTELLUNG VON MAGNETISCHEN NANOVERBUNDWERKSTOFFEN UND SO ERHALTENE MAGNETISCHE NANOVERBUNDWERKSTOFFE

METHOD FOR PRODUCING MAGNETIC NANOCOMPOSITES AND MAGNETIC NANOCOMPOSITES OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2020 FR 2011340**

(43) Date de publication de la demande:
**11.05.2022 Bulletin 2022/19**

(73) Titulaires:
• **Université Paris-Est Créteil Val de Marne**
**94000 Créteil (FR)**
• **Centre national de la recherche scientifique**
**75016 Paris (FR)**

(72) Inventeurs:
• **ZEHANI, Karim**
**94230 CACHAN (FR)**
• **MOSCOVICI, Jacques**
**93340 LE RAINCY (FR)**

• **BESSAIS, Lotfi**
**94320 THIAIS (FR)**

(74) Mandataire: **A.P.I. Conseil**
**Immeuble Newton**
**4, rue Jules Ferry**
**64000 Pau (FR)**

(56) Documents cités:
• **JOVANOVIC ET AL: "pH control of magnetic properties in precipitation-hydrothermal-derived CoFe2O4", JOURNAL OF ALLOYS AND COMPOUNDS, vol. 589, 4 décembre 2013 (2013-12-04), pages 271-277, XP028815788, ISSN: 0925-8388, DOI: 10.1016/J.JALLCOM.2013.11.217**
• **HUSSAIN ET AL: "Dielectric and magnetic properties of cobalt doped-FeOnanoparticles", JOURNAL OF MATERIALS SCIENCE: MATERIALS IN ELECTRONICS, vol. 30, no. 14, 26 juin 2019 (2019-06-26) , pages 13698-13707, XP036974364, ISSN: 0957-4522, DOI: 10.1007/S10854-019-01747-6 [extrait le 2019-06-26]**

EP 3 996 116 B1

## Description

### Domaine technique

La présente invention concerne un procédé de production de nanocomposites magnétiques à base d'oxyde de fer ainsi que les nanocomposites issus de ce procédé et une composition comprenant lesdits nanocomposites magnétiques ainsi que leurs applications.

### Technique antérieure

La nanotechnologie a connu une expansion fulgurante depuis une vingtaine d'années, les nanoparticules en général constituent la base de cette nouvelle technologie et trouvent de multiples applications dans plusieurs domaines tels que la santé, l'électronique, l'environnement, le transport et les produits de consommation et de soins. Les nanoparticules magnétiques en particulier sont de plus en plus utilisées pour perfectionner les protocoles thérapeutiques ou les méthodes de diagnostic mais aussi pour plusieurs autres applications telles que la catalyse, le stockage des données et l'énergie.

Les multiples applications des nanoparticules magnétiques dépendent de leur catégorie magnétique (e.g. matériau magnétique doux, matériau magnétique semi-dur, ou matériau magnétique dur). Par exemple, les matériaux magnétiquement durs peuvent être utilisés comme aimants permanents, les semi-durs pour l'enregistrement magnétique, les doux pour les composants en électronique (e.g. inductances ou transformateurs), comme agent de contraste, comme traceur, comme agent pour le traitement du cancer par hyperthermie magnétique ou encore comme agent antibactérien. En outre, les nanoparticules magnétiques peuvent être utilisés aussi dans les ferrofluides, les fluides magnéto-rhéologiques, le blindage électromagnétique, et dans le traitement des eaux ou des sols.

Il existe une multitude de méthodes de production de nanoparticules magnétiques pouvant produire des nanoparticules ayant un comportement magnétique donné (e.g. paramagnétique, ferromagnétique, ferrimagnétique, anti-ferromagnétique, et super paramagnétique) et une catégorie magnétique donnée (e.g. matériau magnétique doux, matériau magnétique semi-dur, et matériau magnétique dur).

Par exemple, en 2011, Wu et al. (Acta Biomaterialia 7 (2011) 3496-3504) ont synthétisé du ferrite de cobalt par la voie solvothermale en utilisant comme précurseurs les chlorures de fer et de cobalt $FeCl_3.6H_2O$ à 1,5 mmol et $CoCl_2.6H_2O$ à 0,75 mmol.

En 2012, Ma et al. (Materials Research Bulletin 48 (2013) 214-217) ont synthétisé du ferrite de cobalt par la voie solvothermale en plaçant, dans un sceau en inox de 100 ml revêtu de Téflon, 0,5 mmol de $Co(NO_3)_2,6H_2O$, 1 mmol de $FeCl_2,4H_2O$, 0,1 mmol d'hexaméthylène tétramine (HMTA), 50 ml de glycol et 20 ml d'eau désionisée.

En 2015, M. P. Reddy et al. (Journal of Magnetism and Magnetic Materials 388 (2015) 40-44) ont synthétisé $CoFe_2O_4$ par la voie solvothermale à partir de 2 g de tensioactif polyéthylène glycol (PEG) dans 40 ml d'éthylène glycol, 1,5 mmol de chlorure de cobalt hexahydraté ($CoCl_2.6H_2O$) et 3,0 mmol de chlorure ferrique hexahydraté ($FeCl_3.6H_2O$).

En 2017, S. Briceno et al. (Materials Science and Engineering C 78 (2017) 842-846) ont synthétisé des ferrites de cobalt à partir de 1,60 g de $FeCl_3: 6H_2O$, 0,8 g de $CoNO_3: 6H_2O$, 2,5 g de chitosane, 3,6 g de NaOAc , 1,0 g de PVP et 50 mL d'éthylène glycol.

JOVANOVIC ET AL: "pH control of magnetic properties in precipitation-hydrothermal-derived CoFe2O4", JOURNAL OF ALLOYS AND COMPOUNDS, vol. 589, 2013-12-04, pages 271-277, et

HUSSAIN ET AL: "Dielectric and magnetic properties of cobalt doped-FeOnanoparticles", JOURNAL OF MATERIALS SCIENCE: MATERIALS IN ELECTRONICS, vol. 30, no. 14, 2019-06-26, pages 13698-13707

divulguent un procédé de fabrication des nanocomposites magnétiques sans dissolutions séparées des précurseurs.

En revanche, pour une même composition de précurseurs et un procédé donné, il n'existe pas encore à ce jour de moyen simple et efficace pour moduler la catégorie magnétique (e.g. matériau magnétique doux, matériau magnétique semi-dur, et matériau magnétique dur) en fonction des besoins de l'utilisateur.

Il existe donc un besoin de disposer d'un procédé de production de nanoparticules magnétiques permettant d'ajuster aisément les propriétés magnétiques de ces nanoparticules magnétiques en fonction de l'utilisation envisagée.

### Résumé de l'invention

L'invention vise à pallier ces inconvénients. L'invention a notamment pour objet un procédé de production de nanocomposites magnétiques permettant de rendre multifonctionnelle une même composition de précurseurs pour diverses applications en choisissant leur catégorie magnétique aisément (matériau magnétique doux, ou matériau magnétique semi-dur, ou matériau magnétique dur). Ainsi, les nanocomposites magnétiques produits peuvent posséder une catégorie magnétique donnée : matériau magnétique doux, ou matériau magnétique semi-dur, matériau magnétique dur selon les besoins. Conversion des mesures cgs dans la description et les figures: 1kOe = 79.6kA/m, 1MGOe = 7.96kJ/m$^3$, 1emu/g = 1Am/kg.

Selon la revendication 1, l'invention porte sur un procédé de production de nanocomposites magnétiques à base d'oxyde de fer, de préférence lesdits nanocomposites magnétiques présentant une catégorie magnétique donnée, la catégorie magnétique donnée étant par exemple sélectionnée parmi matériau magnétique doux, ou en un matériau magnétique semi-durs, ou en un matériau magnétique durs ; ledit procédé de production de nanoparticules magnétiques ou nanocomposites magnétiques à base d'oxyde de fer, comprend les étapes suivantes :

a0) dissolutions séparées :

- d'un précurseur à base de fer F dans un solvant aqueux et/ou solvant organique dans un premier contenant,
- d'au moins un précurseur métallique M autre qu'un précurseur à base de fer dans un solvant dans un deuxième contenant,
- optionnellement d'au moins un précurseur de terres rares R,
- d'une base B dans un solvant dans un troisième contenant ;

a) introduction à température ambiante du précurseur à base de fer F dissous et de l'au moins un précurseur métallique M autre qu'un précurseur à base de fer dissous, d'au moins une base B dissoute, et optionnellement d'au moins un précurseur de terres rares R dissous, dans un ordre donné d'introduction dans un autoclave, la combinaison de ces précurseurs dissouts avec la base B entrainant une co-précipitation desdits précurseurs, l'ordre d'introduction de la base B dissoute dans l'autoclave par rapport aux introductions des précurseurs dissous permettant d'obtenir différents précipités, de préférence permettant d'obtenir différents précipités dans des quantités variables,
l'ordre donné d'introduction, lors de l'étape a), des solutions de l'étape a0) dans l'autoclave est sélectionné parmi :

- lorsque les précurseurs dissous ne comportent pas de précurseur de terres rares, l'un des ordres d'introduction suivants : MBF, MFB, FMB, FBM, BMF, ou BFM, de préférence MBF ou MFB, ;
Ou
- lorsque au moins un précurseur de terres rares dissous est généré à l'étape a0), l'un des ordres d'introduction suivants : MRFB, MRBF, MFRB, MFBR, MBFR, MBRF, RMFB, RMBF, RFMB, RFBM, RBFM, RBMF, BRFM, BRMF, BFMR, BFRM, BMFR, BMRF, FRBM, FRMB, FMRB, FMBR, FBRM, ou FBMR, de préférence MRBF, RMFB, FRBM, BFRM, ou MBRF, plus préférentiellement MRBF ou RMFB ;

Avec :

- F est un précurseur à base de fer,
- M est le ou les précurseur(s) métallique(s) autre(s) qu'un précurseur à base de fer, et M est choisi parmi les chlorures métalliques, les nitrates métalliques, les acétates métalliques, les sulfates métalliques et/ou parmi les précurseurs à base de cobalt, de nickel, de zinc et/ou de cuivre, de préférence à base de cobalt, plus préférentiellement un chlorure de cobalt ;
- B est la ou les base(s) ;
- R est le ou les précurseur(s) de terres rares

b) production hydrothermale et/ou solvothermale ;
de façon à obtenir des nanocomposites magnétiques qui présentent une phase principale et une ou plusieurs phases secondaires M'$_2$(OH)$_2$O$_2$ et/ou R(OH)$_3$, lesdits nanocomposites magnétiques présentant une catégorie magnétique donnée qui est fonction de l'ordre d'introduction donné des précurseurs dissous par rapport à la base B lors de l'étape a),
avec M'= Fe ou M
c) étape de lavage des nanocomposites magnétiques.

Un tel procédé permet de produire des nanocomposites magnétiques dont le champ coercitif est augmenté par effet de couplage entre une phase principale (e.g. phase composée de spinelle) et une ou plusieurs phases secondaires.

Selon d'autres caractéristiques optionnelles du procédé, ce dernier peut inclure facultativement une ou plusieurs des caractéristiques suivantes, seules ou en combinaison :

- le procédé ne comporte pas d'étape de calcination des nanocomposites magnétiques. En particulier, le procédé ne comporte pas, après l'étape de lavage c), une étape de calcination des nanocomposites magnétiques. Cela permet de conserver la présence d'hydroxydes et/ oxyhydroxydes et donc de produire des nanoparticules présentant une phase principale et une ou plusieurs une phase secondaire. Cela permet d'obtenir comme cela sera décrit dans la suite des nanoparticules magnétiques multifonctionnelles.

- dans l'étape a0) on chauffe les contenants à une température donnée inférieure à la température d'ébullition du solvant, puis on attend le refroidissement à température ambiante avant de réaliser l'étape a). En particulier, pour obtenir la catégorie magnétique donnée des nanocomposites, dans l'étape a0) on chauffe les contenants à une température donnée inférieure à la température d'ébullition du solvant, puis on attend le refroidissement à température ambiante avant de réaliser l'étape a).

- les nanocomposites magnétiques présentent respectivement de 85% à 97% de phase principale et respectivement de 15% à 3% de phase secondaire. De préférence pour la phase principale entre 87% et 94%, et plus préférentiellement entre 90% et 93%. Ainsi, les nanocomposites magnétiques peuvent présenter de préférence 6 à 13 % d'une ou de plusieurs phases secondaires et plus préférentiellement entre 7% et 10%. Ces pourcentages sont généralement des pourcentages massiques. En outre, ils peuvent notamment être déterminés par affinement Rietveld des diffractogrammes des rayons X.

- la phase principale étant un ferrite spinelle de formule brute $Co_xNi_yZn_zCu_uMn_vAg_tFe_{2-w}R_wO_4$, avec

$$x+y+z+u+v+t = 1$$

R : La, Ce, Pr, Nd, Pm, Sm, Eu, Gd, Tb, Dy, Ho, Er, Tm, Yb, et Lu w compris entre 0 et 2.
la production hydrothermale et/ou solvothermale est réalisée à un taux de basicité compris entre 0 et 100, de préférence entre 5 et 25, plus préférentiellement entre 6 et 8, et encore plus préférentiellement le taux de basicité est sensiblement égal à 7, par exemple il est égal à 7. En particulier, le taux de basicité b correspond à

$$b = \frac{n_B}{\sum n_{M'}} = \frac{[B]}{\sum [M']}$$, b: base et M' = M et R. De tels taux de basicité permettent de moduler la morphologie des nanocomposites et la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur. En outre, le procédé peut donc comporter une étape de mesure du taux de basicité et une étape de modification du taux de basicité.

- le précurseur à base de fer et/ou au moins un précurseur métallique autre que le précurseur à base de fer est/sont utilisé(s) dans sa/leur forme anhydre.

- le ou les précurseur(s) de terres rares R est/sont sélectionné(s) parmi les chlorures de terres rares, les nitrates de terres rares, les acétates de terres rares, les sulfates de terres rares et/ou parmi le lanthane, le cérium, le praséodyme, le néodyme, le prométhium, le samarium, l'europium, le gadolinium, le terbium, le dysprosium, l'holmium, l'erbium, le thulium, l'ytterbium, le lutécium, le scandium, et l'yttrium, de préférence le praséodyme.

- différentes concentrations des précurseurs sont utilisées lors de l'étape a0) pour moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur.

Selon la revendication 10, l'invention porte également sur des nanoparticules magnétiques ou nanocomposites magnétiques obtenus par le procédé selon l'invention ou susceptibles d'être obtenus par le procédé selon l'invention. Ces nanocomposites magnétiques comprennent une phase principale et une ou plusieurs phases secondaires $M'_2(OH)_2O_2$, et/ou $R(OH)_3$ qui permettent de moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur,

Avec :

- M'= Fe ou M,
- M choisi parmi les chlorures métalliques, les nitrates métalliques, les acétates métalliques, les sulfates métalliques et/ou parmi les précurseurs à base de cobalt, de nickel, de zinc et/ou de cuivre, de préférence à base de cobalt, plus préférentiellement un chlorure de cobalt ;

- R : La, Ce, Pr, Nd, Pm, Sm, Eu, Gd, Tb, Dy, Ho, Er, Tm, Yb, et Lu,

- les nanocomposites magnétiques selon l'invention présentent respectivement de 85% à 97% en masse de phase principale et respectivement de 15% à 3% en masse de phase secondaire. Cela permet de moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur. De préférence pour la phase principale entre 87% et 94%, et plus préférentiellement entre 90% et 93%. Ainsi, les nanocomposites magnétiques peuvent présenter de préférence 6 à 13 % d'une ou de plusieurs phases secondaires et plus préférentiellement entre 7% et 10%. Ces pourcentages sont généralement des pourcentages massiques. En outre, ils peuvent notamment être déterminés par affinement Rietveld des diffractogrammes des rayons X,

- La phase principale est le ferrite spinelle de formule brute $Co_xNi_yZn_zCu_uMn_vAg_tFe_{2-w}R_wO_4$ avec

$$x+y+z+u+v+t = 1$$

R : La, Ce, Pr, Nd, Pm, Sm, Eu, Gd, Tb, Dy, Ho, Er, Tm, Yb, et Lu w compris entre 0 et 2.

- les nanocomposites magnétiques selon l'invention présentent un champ coercitif de coercivité compris entre 1Oe et 20kOe, de préférence entre 0.5kOe et 10kOe, de préférence entre 5 kOe et 10 kOe.

- les nanocomposites magnétiques selon l'invention présentent

  - un champ coercitif ($Hc$) supérieur à 397.9kA/m qui correspond à la formule chimique suivante : $MFe_{2-x}R_xO_4$ (M : Co et R : Pr ; $0 \leq x \leq 0,2$ ) et de préférence est obtenu :

    - à un taux de basicité, b, égal à 7
    - à un taux d'hydrolyse, h, supérieur à 450
    - sans chauffage préalable des solutions de précurseurs dissoutes,
    - avec l'ordre d'introduction des précurseurs dans l'autoclave suivant : MRBF (M : Co ; B : NaOH ; F : Fe ; et R : Pr)

  - un champ coercitif ($Hc$) supérieur à 238.7kA/m qui correspond à la formule chimique suivante : $MFe_{2-x}R_xO_4$ (M : Co et R : Pr ; $0 \leq x \leq 0,2$ ) et de préférence est obtenu :

    - à un taux de basicité égal à 7
    - à un taux d'hydrolyse, h, supérieur à 450
    - avec chauffage préalable à 70 °C des solutions de précurseurs dissoutes
    - avec l'ordre d'introduction des précurseurs dans l'autoclave suivant : MRBF (M : Co ; B : NaOH ; F : Fe ; et R : Pr) ;

  - un champ coercitif ($Hc$) inférieur à 143.2kA/m qui correspond à la formule chimique suivante : $MFe_{2-x}R_xO_4$ (M : Co et R : Pr ; $0 \leq x \leq 0,1$ ) et de préférence est obtenu :

    - à un taux de basicité égal à 7,
    - à un taux d'hydrolyse, h, supérieur à 450,
    - avec un chauffage préalable, de préférence à 70 °C, des solutions de précurseurs dissoutes,
    - avec l'ordre d'introduction des précurseurs dans l'autoclave suivant : RMBF (M : Co ; B : NaOH ; F : Fe ; et R : Pr) ;

  - un champ coercitif ($Hc$) supérieur à 437.7kA/m qui correspond à la formule chimique suivante : $MFe_{1,8}R_{0,2}O_4$ (M : Co et R : Pr) et de préférence est obtenu :

    - à un taux de basicité égal à 7,
    - à un taux d'hydrolyse, h, supérieur à 450,
    - sans chauffage préalable des solutions de précurseurs dissoutes,
    - avec l'ordre d'introduction des précurseurs suivant : MRBF (M : Co ; B : NaOH ; F : Fe ; et R : Pr) ;

- un champ coercitif (*Hc*) entre 445.6 et 461.5kA/m ($FeCl_3.6H_2O$) ou respectivement entre 445.6 et 461.5kA/m ($FeCl_3$ anhydre), qui correspond à la formule chimique suivante : $MF_{1,85}R_{0,15}O_4$ (M : Co et R : Pr) et de préférence est obtenu :

  - à un taux de basicité égale à 7,
  - à un taux d'hydrolyse, h, supérieur à 450,
  - avec l'utilisation de $FeCl_3.6H_2O$ ou respectivement de $FeCl_3$ anhydre,
  - sans chauffage préalable des solutions de précurseurs dissoutes,
  - avec l'ordre d'introduction des précurseurs suivant : MRBF (M : Co ; B : NaOH ; F : Fe ; et R : Pr)

- un champ coercitif (*Hc*) compris entre 525.2 et 541.1kA/m (xPr = 0,15) et compris entre 549.1 et 580.9kA/m (xPr = 0,30) qui correspond à la formule chimique suivante : $MFe_{2-x}R_xO_4$ (M : Co et R : Pr ; x= 0,15 ; et x = 0,30) et est de préférence obtenu :

  - à un taux de basicité égal à 7,
  - à un taux d'hydrolyse, h, supérieur à 450,
  - avec l'utilisation de $FeCl_3$ anhydre,
  - avec l'ordre d'introduction des précurseurs suivant : MRBF (M : Co ; B : NaOH ; F : Fe ; et R : Pr),
  - avec un chauffage préalable, de préférence à 70 °C, des solutions de précurseurs dissoutes ;

- un champ coercitif (*Hc*) compris entre 413.8 et 437.7kA/m qui correspond à la formule chimique suivante : $MFe_{1,85}R_{0,15}O_4$ (M : Co et R : Pr) et de préférence est obtenu :

  - à un taux de basicité égale à 7,
  - à un taux d'hydrolyse, h, supérieur à 450,
  - avec l'utilisation de $FeCl_3$ anhydre,
  - sans chauffage préalable des solutions de précurseurs dissoutes,
  - avec l'ordre d'introduction des précurseurs suivant : MRBF (M : Co ; B : NaOH ; F : Fe ; et R : Pr),

- un champ coercitif (*Hc*) compris entre 517.3 et 541.1kA/m qui correspond à la formule chimique suivante : $MFe_{1,85}R_{0,15}O_4$ (M : Co et R : Pr) et de préférence est obtenu :

  - à un taux de basicité égal à 7,
  - à un taux d'hydrolyse, h, supérieur à 450,
  - avec l'utilisation de $FeCl_3$ anhydre,
  - avec un chauffage préalable, de préférence à 70 °C, des solutions de précurseurs dissoutes,
  - avec l'ordre d'introduction des précurseurs suivant : MRBF (M : Co ; B : NaOH ; F : Fe ; et R : Pr) ;

- un champ coercitif (*Hc*) compris entre 43.8 et 51.7kA/m (RFBM), compris entre 119.4 et 135.3kA/m (RMFB), et compris entre 453.6 et 469.5kA/m (MRBF) qui correspond à la formule chimique suivante : $MFe_{1,975}R_{0,025}O_4$ (M : Co et R : Pr) et de préférence est obtenu :

  - à un taux de basicité égal à 7,
  - à un taux d'hydrolyse, h, supérieur à 450,
  - avec l'ordre d'introduction des précurseurs suivant : RFBM, RMFB, ou MRBF (M : Co ; B : NaOH ; F : Fe ; et R : Pr),
  - avec un chauffage préalable, de préférence à 70 °C, des solutions de précurseurs dissoutes ;

ou

- un champ coercitif (*Hc*) compris entre 59.7 et 71.6kA/m (MRBF) et compris entre 509.3 et 525.2kA/m (MRBF) qui correspond à la formule chimique suivante : $MFe_{1,925}R_{0,075}O_4$ (M : Co et R : Pr) et de préférence est obtenu :

  - à un taux de basicité égal à 7
  - à un taux d'hydrolyse, h, supérieur à 450
  - avec les ordres d'introduction des précurseurs suivants: MRBF, RMFB, FRBM, BFRM, ou MBRF (M : Co ; B : NaOH ; F : Fe ; et R : Pr),
  - avec un chauffage préalable, de préférence à 70 °C des solutions de précurseurs dissoutes.

Selon la revendication 13, l'invention porte sur une utilisation des nanocomposites magnétiques selon l'invention, dans un ferrofluide, un fluide magnéto-rhéologique, un blindage électromagnétique, et/ou pour le traitement des eaux ou des sols.

Un exemple décrit un ensemble comprenant des nanocomposites magnétiques composites et :

- des peptides anti-cancer ou des peptides anti-bactériens,
- au moins un médicament encapsulé avec les nanocomposites dans un matériau thermosensible, le médicament pouvant être par exemple un agent chimiothérapeutique, et/ou
- un agent radiosensibilisant.

## Brève description des Figures

D'autres caractéristiques et avantages de l'invention seront mieux compris à la lecture de la description qui va suivre et en référence aux dessins annexés, donnés à titre illustratif et nullement limitatif.

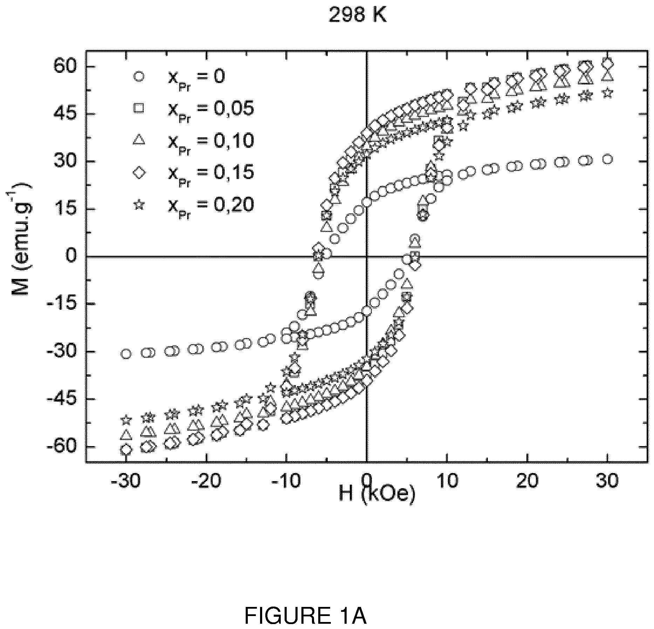

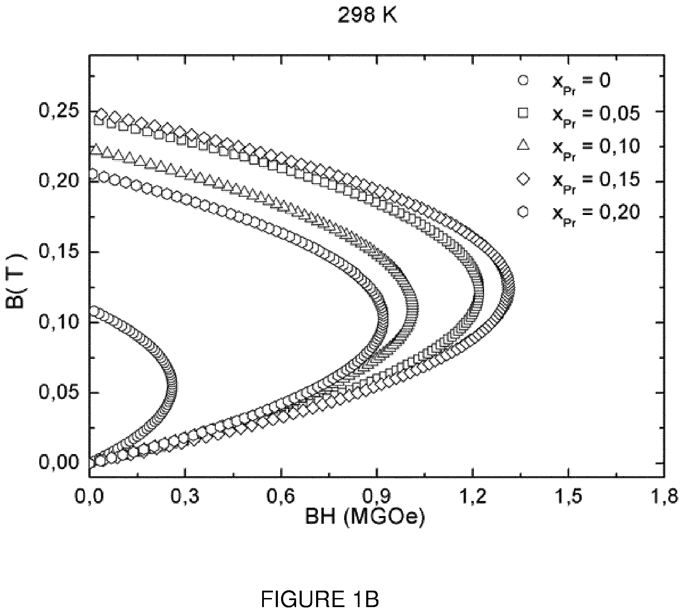

Les figures 1 représentent des cycles d'hystérésis (Fig.1a) et courbes du champ d'induction magnétique en fonction du produit énergétique (BH) (Fig. 1b) des ferrites de cobalt de composition $MFe_{2-x}R_xO_4$ (M : Co et R : Pr ; 0 < x < 0,2) synthétisés à 145 °C pendant 2h, pour un taux de basicité de 7, pour un ordre d'introduction des précurseurs MRBF dans l'autoclave, et sans chauffage préalable des précurseurs.

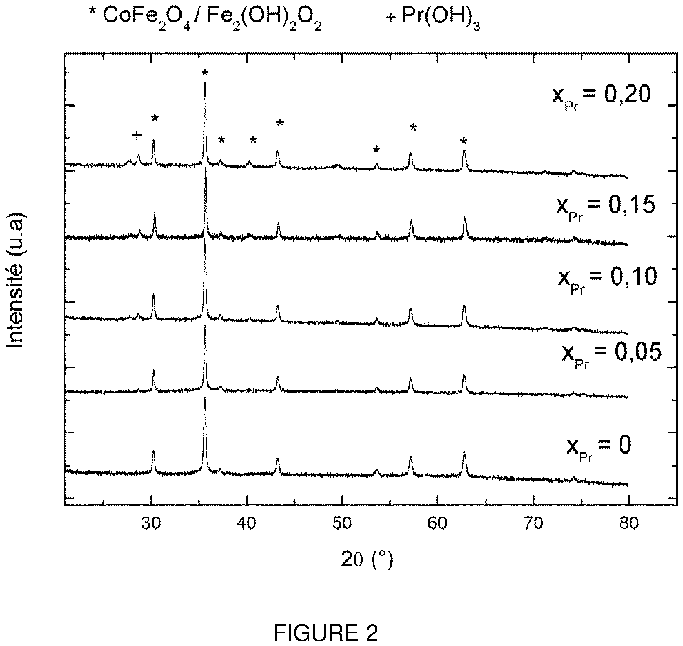

La figure 2 représente des diffractogrammes de rayon X des ferrites de cobalt de composition $MFe_{2-x}R_xO_4$ (M : Co et R : Pr ; 0 < x < 0,2) des ferrites de cobalt ($CoFe_{2-x}Pr_xO_4$, 0 < x < 0,2) synthétisés à 145 °C pendant 2h, pour un taux de basicité de 7, pour un ordre d'introduction des précurseurs MRBF dans l'autoclave, et sans chauffage préalable des précurseurs.

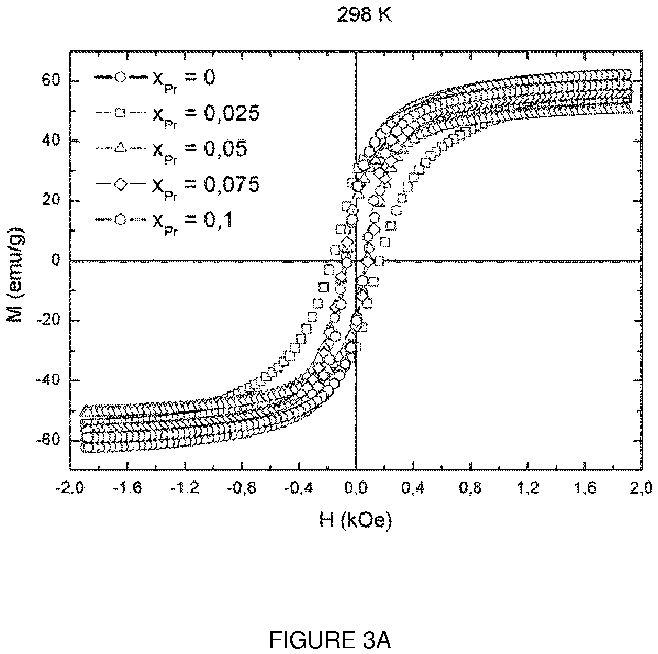

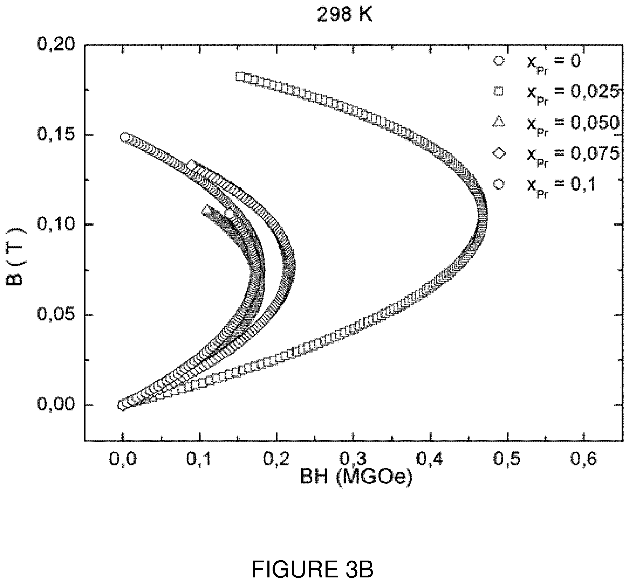

Les figures 3 représentent des cycles d'hystérésis (Fig. 3a) et courbes du champ d'induction magnétique en fonction du produit énergétique (BH) (Fig. 3b) des ferrites de cobalt de composition $MFe_{2-x}R_xO_4$ (M : Co et R : Pr ; 0 < x < 0,1) synthétisé à 145 °C pendant 2h, pour un taux de basicité de 7, pour un ordre d'introduction des précurseurs RMFB dans l'autoclave, avec chauffage préalable des précurseurs.

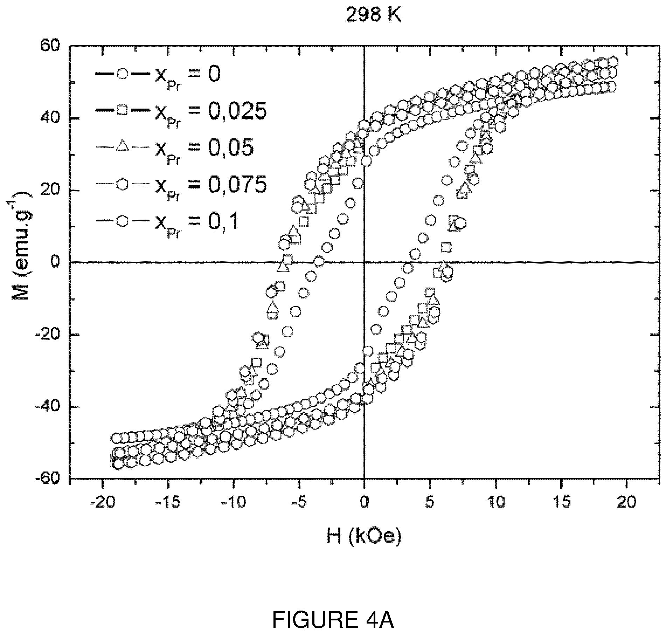

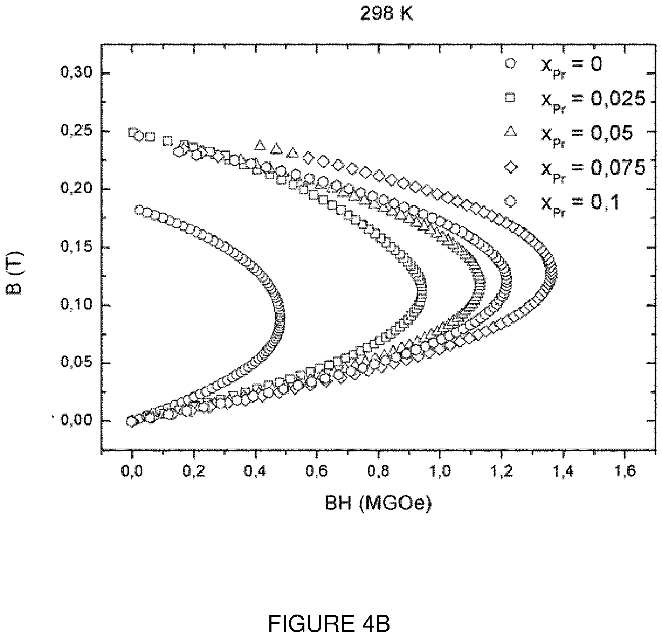

Les figures 4 représentent des cycles d'hystérésis (Fig. 4a) et courbes du champ d'induction magnétique en fonction du produit énergétique (BH) (Fig. 4b) des ferrites de cobalt de composition $MFe_{2-x}R_xO_4$ (M : Co et R :Pr ; 0 < x < 0,1) synthétisé à 145 °C pendant 2h, pour un ordre d'introduction des précurseurs MRBF dans l'autoclave, avec chauffage préalable des précurseurs.

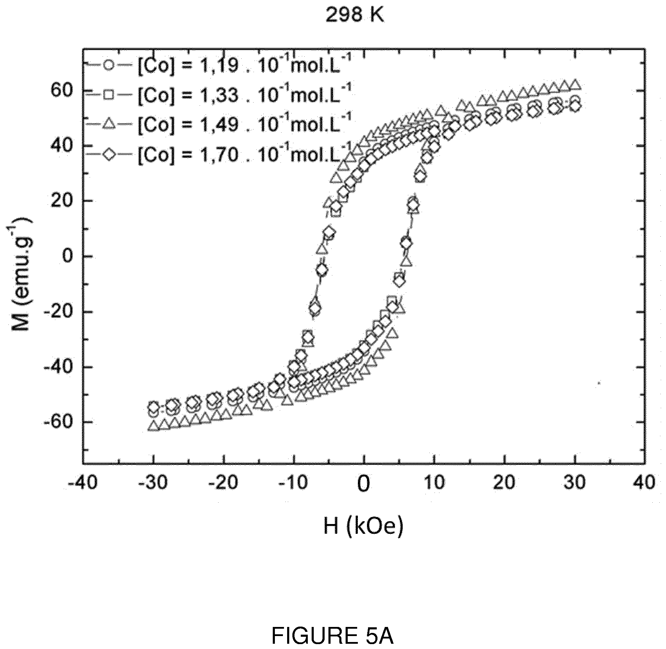

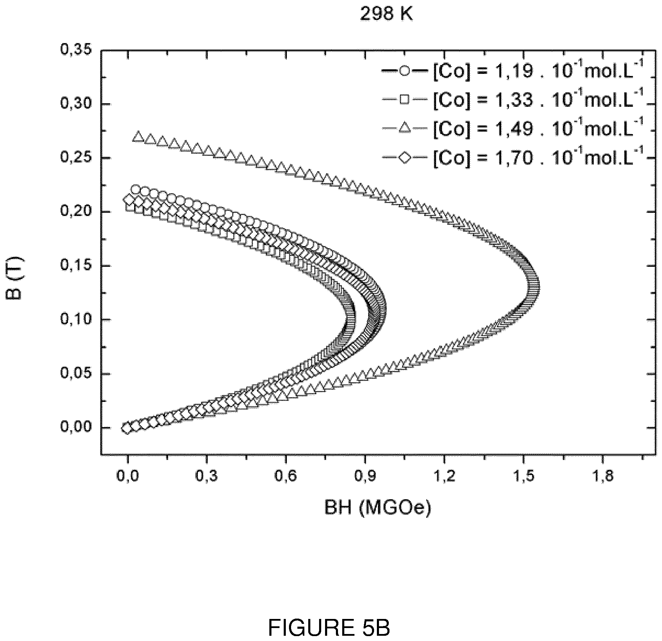

Les figures 5 représentent des cycles d'hystérésis (Fig. 5a) et courbes du champ d'induction magnétique en fonction du produit énergétique (BH) (Fig. 5b) des ferrites de cobalt de composition $MFe_{1,8}R_{0,2}O_4$ (M : Co et R : Pr) pour différentes concentrations de chlorure de cobalt.

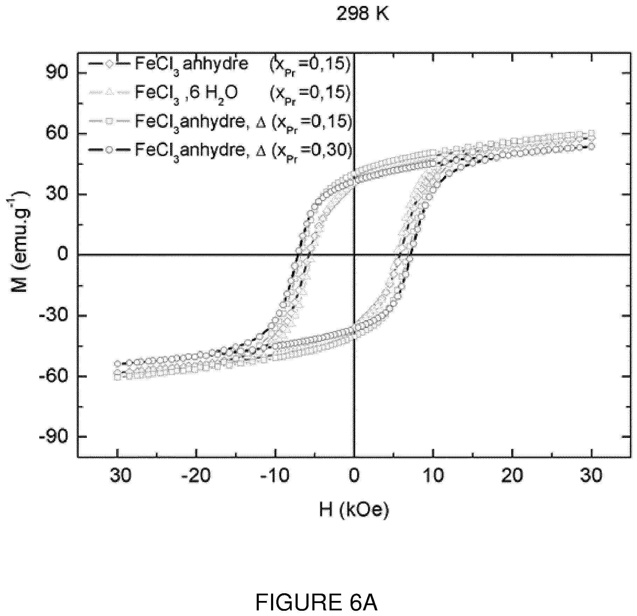

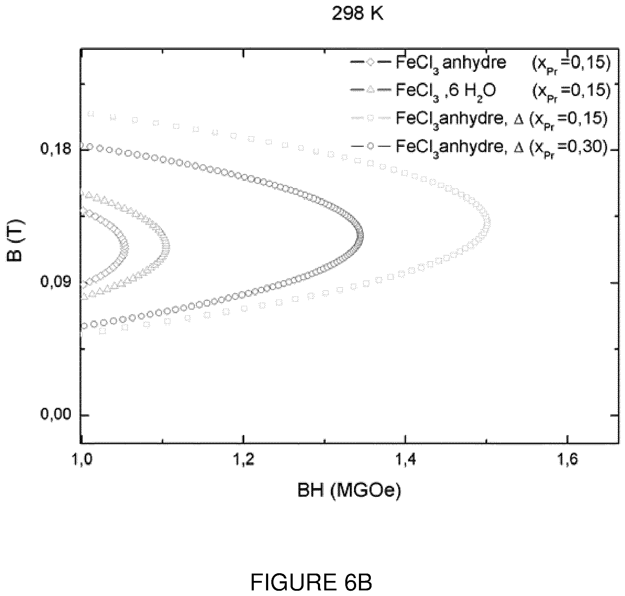

Les figures 6 représentent des cycles d'hystérésis (Fig. 6a) et courbes du champ d'induction magnétique en fonction du produit énérgétique *(BH)* (Fig. 6b) du ferrite de cobalt de composition $MFe_{2-x}R_xO_4$ (M : Co et R : Pr ; x = 0,15 et x = 0,3) pour des échantillons possédant un précurseur de $FeCl_3$ hydraté ou non, avec ou sans chauffage préalable des précurseurs.

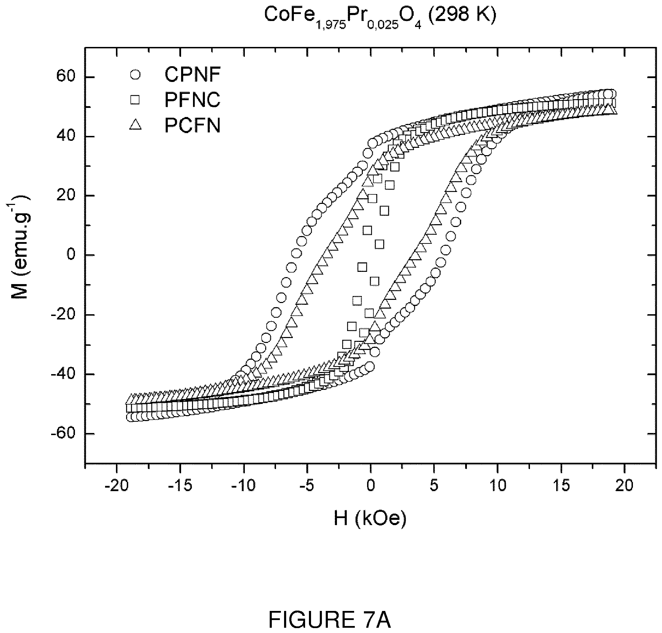

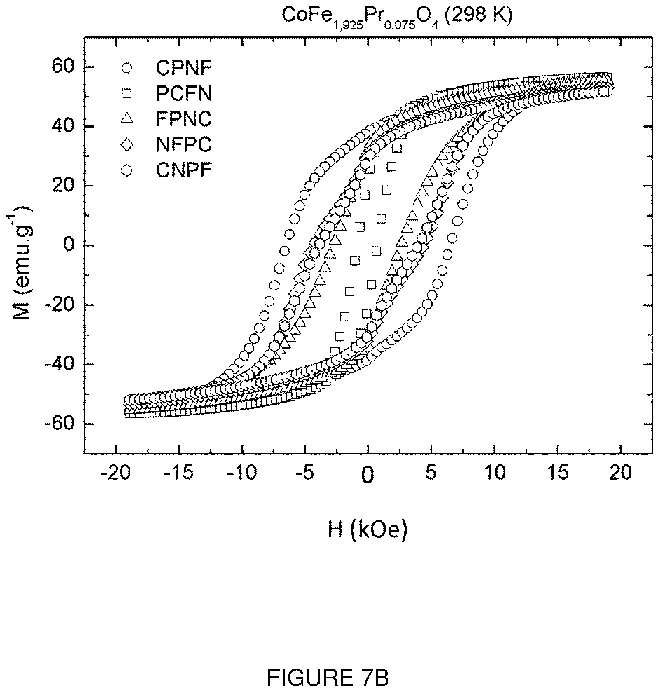

Les figures 7 représentent l'influence de l'ordre d'introduction des précurseurs sur les propriétés magnétiques des ferrites $MFe_{1,975}R_{0,025}O_4$ (M : Co et R : PR) et $MFe_{1,925}R_{0,075}O_4$ (M : Co et R : Pr) synthétisés à 145 °C pendant 2h avec chauffage préalable des précurseurs. En particulier elles représentent des cycles d'hystérésis (Fig. 7a) pour trois ordres MRBF, RFBM, et RMFB et pour la composition $MFe_{1,975}R_{0,025}O_4$ (M : Co et R : Pr) et cycles d'hystérésis (Fig. 7b) pour les ordres MRBF, RMFB, FRBM, BFRM et MBRF *avec CoCl$_2$.6H$_2$O (M) ; PrCl$_3$* (R) ; *NaOH* (B); *FeCl$_3$.6H$_2$O (F).*

## Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Le terme « nanoparticule » peut correspondre à un assemblage d'atomes dont au moins une des dimensions se situe à l'échelle nanométrique, c'est-à-dire au moins une dimension est inférieure ou égale à 100 nm, par exemple inférieure à 100 nm. De préférence, une nanoparticule pourra correspondre à assemblage d'atomes dont les trois dimensions sont à l'échelle nanométrique, par exemple une particule dont le diamètre nominal est inférieur à 100 nm. Le diamètre nominal peut par exemple être mesuré par microscopie électronique en transmission ou microscopie électronique à balayage.

Le terme « nanocomposite » au sens de la présente invention peut correspondre à une nanoparticule présentant des caractéristiques d'un matériau composite à savoir la présence d'au moins deux phases.

Tel qu'utilisé ici, l'expression « nanoparticules magnétiques » ou « nanocomposites magnétiques » peut correspondre à des matériaux ferromagnétiques et ferrimagnétiques, paramagnétiques, super paramagnétiques et antiferromagnétiques. En outre, une nanoparticule à base d'oxyde de fer ou, dans le cadre de la présente invention un nanocomposite magnétique à base d'oxyde de fer, comportera des oxydes de fer par exemple sous la forme de ferrite spinelle. Outre ces oxydes de fer, une nanoparticule ou nanocomposite magnétique à base d'oxyde de fer pourra avantageusement comporter des hydroxydes et/ou des oxyhydroxydes. Ces hydroxydes et/ou des oxyhydroxydes pourront par exemple être des hydroxydes et/ou des oxyhydroxydes de terres rares et des hydroxydes et/ou des oxyhydroxydes métalliques.

Le terme « autoclave » au sens de la présente invention correspond de préférence à un réacteur configuré pour permettre une montée en pression de son contenu au-delà de la pression atmosphérique et une montée en température de son contenu au-delà de la température d'ébullition (e.g. au dela de 100°C).

L'expression « sensiblement égal » au sens de la présente invention peut correspondre à une valeur variant de moins de 15 % par rapport à la valeur comparée, de préférence de moins de 10 %, de façon encore plus préférée de moins de 5 %.

Au sens de la présente invention, un « groupe d'espace » d'un cristal est généralement constitué par l'ensemble des symétries d'une structure cristalline, c'est-à-dire l'ensemble des isométries affines laissant la structure invariante.

L'expression « température ambiante » peut correspondre à une température inférieure ou égale à 50°C, de préférence inférieure ou égale à 30°C, par exemple comprise entre 10°C et 40°C, de préférence comprise entre 15°C et 30°C.

Les présents inventeurs ont découvert de manière surprenante que pour une composition de précurseurs et un procédé de production donné, la variation de certains paramètres de production peut permettre de moduler aisément les propriétés magnétiques de nanoparticules, et ainsi rendre multifonctionnelle ladite composition de précurseurs. Ces paramètres sont notamment l'ordre d'introduction des précurseurs dans l'autoclave lors de l'étape (a).

Comme cela sera détaillé par la suite, les nanoparticules magnétiques forment de préférence des composites (intrinsèques ou extrinsèques) constitués d'une phase principale et d'une ou plusieurs phases secondaires. Ainsi les nanoparticules magnétiques peuvent aussi être appelées des nanocomposites magnétiques.

Ces nanocomposites magnétiques peuvent être produits pour être utilisés comme matériaux magnétiquement durs pour aimants permanents, comme matériaux magnétiquement semi-durs pour l'enregistrement magnétique, comme matériaux magnétiquement doux pour les composants en électronique (inductances ou transformateurs), comme agent de contraste, comme traceur, comme agent pour le traitement du cancer par hyperthermie magnétique, comme agent antibactérien, et pour toutes les applications aux ferrites dans lesquelles il est intéressant de pouvoir moduler les caractéristiques structurales, microstructurales, et magnétiques des nanocomposites sans modifier les propriétés diélectriques.

Les nanoparticules ou nanocomposites magnétiques à base d'oxyde de fer auxquelles il est fait référence ici sont de préférence des particules ayant une forme cubique pour la phase principale, une forme nanofils pour $R(OH)_3$ avec une taille de la phase principale dans la gamme de 1 à 1000 nm de diamètre effectif. Dans un mode de réalisation, la taille de la phase principale des nanocomposites magnétiques (phase spinelle) de la présente invention sont dans la gamme d'environ 10 à 250 nm, d'environ 20 à 250 nm, d'environ 30 à 250 nm, d'environ 10 à 200 nm, de préférence d'environ 20 à 200 nm, 30 à 200 nm, ou 50 à 150 nm de diamètre effectif, avec une taille moyenne des nanocomposites magnétiques (phase spinelle) d'environ 150 nm.

Par exemple, les nanoparticules ou nanocomposites magnétiques selon l'invention peuvent être à base de ferrites Fe-Co, Fe-Ni, Fe-Zn, Fe-Cu, Fe-Co-Ni, Fe-Co-Zn, Fe-Ni-Zn, Fe-Co-Ni-Zn ou Fe-Co-Ni-Zn-Cu.

De préférence, les nanocomposites magnétiques selon l'invention sont à base de ferrites tel que le ferrite Fe-Zn, le ferrite de Fe-Ni, le ferrite de Fe-Co, le ferrite Fe-Cu, le ferrite de Fe-Mn, le ferrite Fe-Ag, le ferrite Fe-Ni-Zn, le ferrite Fe-Cu-Zn, le ferrite Fe-Mn-Zn, le ferrite Fe-Co-Zn, le ferrite Fe-Ag-Zn, le ferrite Fe-Co-Cu, le ferrite Fe-Co-Mn, le ferrite Fe-Co-Ni, le ferrite Fe-Co-Ag, le ferrite Fe-Ni-Cu, le ferrite Fe-Mn-Cu, le ferrite Fe-Zn-Cu, le ferrite Fe-Ag-Cu, le ferrite Fe-Ni-Zn-Cu, le ferrite Fe-Ni-Zn-Mn, le ferrite Fe-Ni-Zn-Co, le ferrite Fe-Ni-Zn-Ag, le ferrite Fe-Ni-Zn-Cu-Mn, le ferrite Fe-Ni-Zn-Cu-Ag, le ferrite Fe-Ni-Zn-Co-Mn, le ferrite Fe-Ni-Zn-Co-Ag, le ferrite Fe-Ni-Zn-Co-Cu et le ferrite Fe-Ni-Zn-Co-Cu-Mn.

Comme cela a été mentionné, les nanoparticules magnétiques issues du procédé selon l'invention peuvent former avantageusement des composites magnétiques, ou nanocomposites magnétiques, constitués d'une phase principale et d'une ou plusieurs phases secondaires rendant leurs propriétés magnétiques multifonctionnelles.

Les composites magnétiques, ou nanocomposites, peuvent être intrinsèques ou extrinsèques c'est à dire comprenant un mélange de phases selon les paramètres de production utilisés.

La phase principale de ces composites obtenus, ou nanocomposites, peut par exemple être le ferrite spinelle de structure cubique à face centrée et de groupe d'espace $Fd\bar{3}m$.

Les phases secondaires, par exemple $M'_2(OH)_2O_2$ avec M' : M ou Fe, et $R(OH)_3$ avec R : terres rares, peuvent cristalliser respectivement dans une structure cubique à face centré et hexagonale de groupe d'espace $Fd\bar{3}m$ et $P6\bar{3}/m$ respectivement. En particulier, les phases secondaires, par exemple $Fe_2(OH)_2O_2$, et $Pr(OH)_3$, cristallisent respectivement dans une structure cubique à face centré et hexagonale de groupe d'espace $Fd\bar{3}m$ et $P6\bar{3}/m$ respectivement.

De préférence, ces ferrites spinelles ont pour formule brute $M_{1-y}T_yFe_{2-x-y}R_xT_yO_4$ où M et T sont des métaux de transitions (exemple : M : Co, Fe, Ni, Cu, Mn, Zn ; R : Sm, Pr, Dy, ... ; et T : Zn, Cu, Mn, ...).

Par exemple, les ferrites $CoFe_{2-w}Pr_wO_4$ (0 < w < 2) sont synthétisés par dissolution dans l'eau du NaOH, $CoCl_2.6H_2O$, $FeCl_3.6H_2O$, et/ou $PrCl_3.xH_2O$ ou anhydre.

Ainsi, la phase principale peut être un ferrite spinelle de formule brute $Co_xNi_yZn_zCu_uMn_vAg_tFe_{2-w}R_wO_4$, avec

$$x+y+z+u+v+t = 1$$

R : La, Ce, Pr, Nd, Pm, Sm, Eu, Gd, Tb, Dy, Ho, Er, Tm, Yb, et Lu

w étant compris entre 0 et 2.

Les nanoparticules ou nanocomposites issus du procédé selon l'invention peuvent appartenir à une catégorie d'un matériau magnétique doux, ou d'un matériau magnétique semi-dur, ou d'un matériau magnétique dur selon les paramètres de production choisis.

Le champ coercitif des nanocomposites magnétiques durs est de préférence supérieur à 5kOe (500 mT).

Le champ coercitif des nanocomposites magnétiques semi-durs peut varier entre 1 kOe (100 mT) et 5 kOe (500 mT).

Le champ coercitif des nanocomposites doux est de préférence inférieur à 1 kOe (100 mT).

Les nanocomposites magnétiques à base d'oxyde de fer selon l'invention peuvent comporter une terre rare R telle que le Praséodyme Pr, le Samarium Sm, le dysprosium Dy, etc. En particulier, les nanocomposites magnétiques à base d'oxyde de fer selon l'invention peuvent être substitués par une terre rare R telle que le Praséodyme Pr, le Samarium Sm, le dysprosium Dy, etc.

Les nanocomposites magnétiques à base d'oxyde de fer selon l'invention sont synthétisés par la combinaison de deux méthodes de synthèse : la co-précipitation des précurseurs et la synthèse hydrothermale (eau comme solvant) et/ou solvothermale (solvant autre que l'eau).

Dans un mode de réalisation préféré, les nanocomposites magnétiques à base d'oxyde de fer selon l'invention sont synthétisés par le procédé suivant : une dissolution séparée de chacun des précurseurs dans des contenants différents et dans un même solvant (étape a0), une combinaison avec un certain ordre des solutions dans lesquelles ont été dissoutes les précurseurs (étape a), une production hydro et/ou solvothermale (étape b), et un lavage (étape c) qui n'est pas suivi d'une calcination, permettant par-là de garder les phases secondaires hydroxydes et/ou oxyhydroxydes dans les nanocomposites magnétiques.

Les inventeurs ont découvert de manière surprenante que le fait de préserver les phases secondaires influe sur les propriétés magnétiques des nano composites magnétiques synthétisés.

Plus précisément, dans une étape a0), des dissolutions séparées avec un même solvant sont réalisées à une température donnée (avec ou sans chauffage, et quand il y a chauffage, il est suivi d'un refroidissement à la température donnée) :

- d'un précurseur à base de fer (F) dans un solvant dans un premier contenant,

- d'au moins un précurseur métallique (M) autre qu'un précurseur à base de fer dans un solvant dans un deuxième contenant,

- optionnellement d'au moins un précurseur de terres rares (R), et

- d'une base dans un solvant dans un troisième contenant.

L'étape a) du procédé selon l'invention qui suit l'étape a0) est ensuite une co-précipitation des solutions à base d'un précurseur à base de fer (F) et d'au moins un précurseur métallique (M) autre qu'un précurseur à base de fer et optionnellement d'au moins un précurseur de terres rares (R) dans un autoclave en présence de la solution contenant la base (B).

Plus précisément, dans une étape a), la durée entre chaque introduction des précurseurs varie entre 0 et 3600 s, préférentiellement entre 1s et 360 s, plus préférentiellement entre 1 et 36s, et plus préférentiellement entre 3 et 6s.

La synthèse par co-précipitation est une méthode de production de nanoparticules magnétique très employée et connue de l'état de l'art.

La procédé de l'invention peut être utilisée pour synthétiser des nanoparticules de ferrite ($Fe_3O_4$), ainsi que de nombreux autres ferrites, tels que le ferrite Fe-Zn, le ferrite de Fe-Ni, le ferrite de Fe-Co, le ferrite Fe-Cu, le ferrite de Fe-Mn, le ferrite Fe-Ag, le ferrite Fe-Ni-Zn, le ferrite Fe-Cu-Zn, le ferrite Fe-Mn-Zn, le ferrite Fe-Co-Zn, le ferrite Fe-Ag-Zn, le ferrite Fe-Co-Cu, le ferrite Fe-Co-Mn, le ferrite Fe-Co-Ni, le ferrite Fe-Co-Ag, le ferrite Fe-Ni-Cu, le ferrite Fe-Mn-Cu, le ferrite Fe-Zn-Cu, le ferrite Fe-Ag-Cu, le ferrite Fe-Ni-Zn-Cu, le ferrite Fe-Ni-Zn-Mn, le ferrite Fe-Ni-Zn-Co, le ferrite Fe-Ni-Zn-Ag, le ferrite Fe-Ni-Zn-Cu-Mn, le ferrite Fe-Ni-Zn-Cu-Ag, le ferrite Fe-Ni-Zn-Co-Mn, le ferrite Fe-Ni-Zn-Co-Ag, le ferrite Fe-Ni-Zn-Co-Cu et le ferrite Fe-Ni-Zn-Co-Cu-Mn. Les fines particules de ferrite sont obtenues par le procédé de l'invention à partir de solutions aqueuses de $Fe^{3+}$ trivalent et de métal bivalent $Me^{2+}$, où $Me^{2+}$ peut être $Fe^{2+}$, $Mn^{2+}$, $Co^{2+}$, $Ni^{2+}$, $Cu^{2+}$, $Ag^{2+}$ et / ou $Zn^{2+}$.

Selon un mode de réalisation, le pH lors de la co-précipitation est compris entre 0,1 et 14, de préférence entre 7 et 14, et plus particulièrement entre 8 et 12.

De façon préféré, la production hydrothermale et/ou solvothermale se fait à un taux de basicité b (

$$b = \frac{n_B}{\sum n_{M'}} = \frac{[B]}{\sum [M']}$$

, b: base et M' = M et R) de 0 à 100, de préférence entre 5 et 25, plus préférentiellement entre 6 et 8, et encore plus préférentiellement 7.

Les inventeurs ont découvert de manière surprenante que la valeur du taux de basicité, en particulier lors de l'étape de production hydrothermale et/ou solvothermale, a une influence importante sur les propriétés magnétiques des nanocomposites magnétiques synthétisés.

Selon un mode de réalisation, lors de l'étape (a) du procédé de l'invention, $Fe^{3+}$ / $M^{2+}$ sont présents à un ratio de 2:1.

Selon un mode de réalisation, le procédé de l'invention est effectué dans un environnement oxydant (les étapes a0 et a) ; un environnement oxydant ou non (l'étape b) et un environnement oxydant ou non (l'étape c). Étant très sensible à l'oxydation, la magnétite ($Fe_3O_4$) est transformée en maghémite ($\gamma Fe_2O_3$) en présence d'oxygène.

La taille et la forme des nanocomposites magnétiques peuvent être contrôlées en ajustant le taux de basicité b, le taux d'hydrolyse h, le choix du solvant (la nature du polyol), la nature de la base, position des ions hydroxyde, la nature des sels (perchlorates, chlorures, sulfates et nitrates), la force ionique, la température de chauffage, la température de synthèse, et le rapport de concentration M (II) / Fe (III).

Les inventeurs ont également découvert de manière surprenante que la valeur du taux d'hydrolyse, en particulier lors de l'étape de production hydrothermale, a une influence importante la morphologie et donc sur les propriétés magnétiques des nanocomposites magnétiques synthétisés.

Selon un mode de réalisation, le précurseur à base de fer (F) est sélectionné parmi les chlorures de fer ($FeCl_2$, $FeCl_3$), nitrates de fer ($Fe(NO_3)_3$), acétates de fer, de préférence acétate de fer II ($Fe(CO_2CH_3)_2$), sulfates de fer, de préférence monohydraté ($FeSO_4.H_2O$) ou heptahydraté ($FeSO_4.7H_2O$) ; de préférence le précurseur à base de fer (F) est un chlorure de fer ($FeCl_2$, $FeCl_3$), plus préférentiellement le chlorure ferrique hexahydraté ($FeCl_3. 6H_2O$).

Selon un mode de réalisation, le ou les précurseur(s) métallique(s) (M) autre(s) qu'un précurseur à base de fer est/sont sélectionné(s) parmi les chlorures métalliques, les nitrates métalliques, les acétates métalliques, les sulfates métalliques et/ou parmi les précurseurs à base de cobalt, de nickel, de manganèse, de magnésium, de zinc et de cuivre, de préférence à base de cobalt, plus préférentiellement un chlorure de cobalt.

Selon un mode de réalisation, le ou les précurseur(s) de terres rares (R) est/sont sélectionné(s) parmi les chlorures de terres rares, les nitrates de terres rares, les acétates de terres rares, les sulfates de terres rares et/ou parmi le lanthane, le cérium, le praséodyme, le néodyme, le prométhium, le samarium, l'europium, le gadolinium, le terbium, le dysprosium, l'holmium, l'erbium, le thulium, l'ytterbium, le lutécium, le scandium, et l'yttrium, de préférence le praséodyme.

Selon un mode de réalisation, la ou les base(s) est/sont sélectionnées parmi l'oxyde de sodium $Na_2O$ et l'hydroxyde de sodium ou soude (NaOH) ; L'oxyde de potassium $K_2O$ et l'hydroxyde de potassium ou potasse (KOH) ; L'oxyde de césium $Cs_2O$ et l'hydroxyde de césium (CsOH) ; L'oxyde de calcium CaO et l'hydroxyde de calcium ($Ca(OH)_2$) ; L'oxyde de baryum BaO et l'hydroxyde de baryum ($Ba(OH)_2$) ; ou l'ion amidure ($NH^{2-}$), de préférence l'hydroxyde de sodium (NaOH).

Selon un mode préféré de l'invention, les précurseurs de la dissolution de l'étape a0) comprennent du chlorure de fer, du chlorure de cobalt, et du praséodyme, en présence d'hydroxyde de sodium. Selon un mode préféré de

**EP 3 996 116 B1**

l'invention, les précurseurs de la co-précipitation de l'étape a) comprennent du chlorure de fer, du chlorure de cobalt, et du praséodyme, en présence d'hydroxyde de sodium.

La concentration initiale de chaque précurseur dissous peut jouer un rôle sur les propriétés des nanocomposites magnétiques selon l'invention. Il est donc possible de moduler la ou les concentration(s) des précurseurs lors de la dissolution de l'étape a0) afin de modifier aisément les propriétés magnétiques des nanocomposites selon l'invention.

Selon un mode de réalisation, les précurseurs dissouts à l'étape a0) comprennent :

- de 0,001 à 100 mol.L$^{-1}$ d'un précurseur à base de fer, de préférence compris entre 0,01 à 0,1 mol.L$^{-1}$, et particulièrement entre 0,0192 et 0,312 mol.L$^{-1}$ ; et
- de 0,001 à 100 mol.L$^{-1}$ d'un précurseur à base de cobalt, de préférence compris entre 0,01 à 1 mol.L$^{-1}$, et particulièrement entre 0,016 et 0,639 mol.L$^{-1}$ ; et/ou
- de 0,001 à 100 mol.L$^{-1}$ d'un précurseur à base de nickel, de préférence compris entre 0,01 à 1 mol.L$^{-1}$, et particulièrement entre 0,016 et 0,639 mol.L$^{-1}$ ; et/ou
- de 0,001 à 100 mol.L$^{-1}$ d'un précurseur à base de zinc, de préférence compris entre 0,01 à 1 mol.L$^{-1}$, et particulièrement entre 0,016 et 0,639 mol.L$^{-1}$ ; et/ou
- de 0,001 à 100 mol.L$^{-1}$ d'un précurseur à base de cuivre, de préférence compris entre 0,01 à 1 mol.L$^{-1}$, et particulièrement entre 0,016 et 0,639 mol.L$^{-1}$ ; et/ou
- de 0 à 10 mol.L$^{-1}$ d'un précurseur terres rares, de préférence compris entre 0 à 1 mol.L$^{-1}$, et particulièrement entre 0 et 0,160 mol.L$^{-1}$ ; et
- de 0,1 à 1000 mol.L$^{-1}$ d'une base, de préférence entre 0,1 et 100 mol.L$^{-1}$, et particulièrement entre 1 et 20 mol.L$^{-1}$ ; lesdites concentrations étant les concentrations des précurseurs lors de leur introduction dans l'autoclave, i.e. au début de l'étape a) de co-précipitation.

Le préchauffage ou non des précurseurs pendant l'étape a0) peut aussi jouer un rôle sur les propriétés des nanocomposites magnétiques selon l'invention. Il est donc possible de moduler le chauffage des précurseurs afin de modifier aisément les propriétés magnétiques des nanocomposites magnétiques selon l'invention.

Selon un mode de réalisation, les précurseurs sont chauffés pendant la dissolution de l'étape a0), de préférence à une température comprise entre 30°C et 100°C, plus préférentiellement entre 40 et 90°C, encore plus préférentiellement entre 50 et 80°C, encore plus préférentiellement entre 65 et 75°C, encore plus préférentiellement 70°C ; puis ils sont refroidis à la température ambiante avant d'être mis ensemble avec la base pour co-précipiter dans l'autoclave.

Selon un autre mode de réalisation, les précurseurs ne sont pas chauffés pendant la dissolution de l'étape a0).

L'hydratation ou non d'au moins un des précurseurs peut aussi jouer un rôle sur les propriétés des nanocomposites magnétiques selon l'invention. Il est donc possible de moduler l'hydratation des précurseurs afin de modifier la morphologie des nanoparticules et de modifier aisément les propriétés magnétiques des nanocomposites magnétiques selon l'invention.

Selon un mode de réalisation, le précurseur à base de fer et/ou au moins un précurseur métallique autre que le précurseur à base de fer est/sont utilisé(s) dans sa/leur forme anhydre.

Selon un autre mode de réalisation, le précurseur à base de fer et/ou au moins un précurseur métallique autre que le précurseur à base de fer est/sont utilisé(s) dans sa/leur forme hydratée.

L'ordre d'introduction des précurseurs pendant l'étape a) dans l'autoclave peut jouer un rôle sur les propriétés des nanocomposites magnétiques selon l'invention et les rendre multifonctionnelles pour une composition donnée (voir exemples 2 et 7).

Lors de l'étape a) du procédé selon l'invention, les précurseurs sont co-précipités successivement dans un autoclave en présence d'au moins une base. Les inventeurs ont découvert de manière surprenante que l'ordre dans lequel les différents précurseurs et la ou les base(s) sont introduits dans l'autoclave influe sur les propriétés magnétiques des nanocomposites magnétiques ainsi synthétisées.

Par exemple, pour des nanocomposites magnétiques de formule $MFe_{1,925}R_{0,075}O_4$ (M : Co et R : Pr), l'ordre MRBF (ou F est le Fer, M est le Cobalt, B est la base (NaOH), et R est le praséodyme) permet de produire des nanocomposites magnétiques durs (champ coercitif élevé) alors que l'ordre RMFB permet de produire des nanocomposites magnétiques doux (champ coercitif bas), et ce pour un même procédé (voir exemples 2 et 7).

Les composés des étapes a0) et a) sont introduits dans l'autoclave selon :

- l'un des ordres suivants en absence d'au moins un précurseur de terres rares: MBF, MFB, FMB, FBM, BMF, ou BFM, de préférence MBF ou MFB ; où
- F est un précurseur à base de fer,
- M est le ou les précurseur(s) métallique(s) autre(s) qu'un précurseur à base de fer, et
- B est la ou les base(s) ;
   Ou

- l'un des ordres suivants si au moins un précurseur de terres rares est présent à l'étape a) :
MRFB, MRBF, MFRB, MFBR, MBFR, MBRF, RMFB, RMBF, RFMB, RFBM, RBFM, RBMF, BRFM, BRMF, BFMR, BFRM, BMFR, BMRF, FRBM, FRMB, FMRB, FMBR, FBRM, ou FBMR, de préférence MRBF, RMFB, FRBM, BFRM, ou MBRF, plus préférentiellement MRBF ou RMFB ; où

- R est le ou les précurseur(s) de terres rares.

Selon un mode de réalisation préféré de l'invention, les précurseurs utilisés sont du chlorure de fer, de préférence $FeCl_3.6H_2O$, du chlorure de cobalt, de préférence $CoCl_2.6H_2O$ et du chlorure de praséodyme (PrCl3), en présence d'hydroxyde de sodium pour produire des nanocomposites magnétiques multifonctionnelle de formule $MFe_{1,925}R_{0,075}O_4$ (M : Co et R :Pr).

Selon le mode de réalisation préféré du paragraphe précédent, les ordres préférés d'introduction des précurseurs dans l'autoclave sont MRBF, RMFB, FRBM, BFRM, ou MBRF, plus préférentiellement MRBF ou RMFB.

Toujours dans ce mode de réalisation préféré :

- l'ordre MRBF permet de produire des nanocomposites magnétiques durs, de préférence ayant un champ coercitif (Hc) compris entre 5 kOe (500 mT) et 7 kOe (700 mT), plus préférentiellement entre 6 kOe (600 mT) et 7 kOe (700 mT), encore plus préférentiellement entre 6,25 kOe (625 mT) et 6,75 kOe (675 mT).

    - Les ordres BFRM et MBRF permettent de produire des nanocomposites magnétiques semi-durs, de préférence ayant un champ coercitif Hc compris entre 3 kOe (300 mT) et 5 kOe (500 mT), plus préférentiellement entre 3,5 kOe (350 mT) et 4,5 kOe (450 mT).
    - L'ordre FRBM permet de produire des nanocomposites magnétiques semi-durs, de préférence ayant un champ coercitif Hc compris entre 1 kOe (100 mT) et 4 kOe (400 mT), plus préférentiellement entre 2 kOe (200 mT) et 3 kOe (300 mT).
    - L'ordre RMFB permet de produire des nanocomposites magnétiques doux, de préférence ayant un champ coercitif Hc compris entre 0,5 kOe (50 mT) et 1 kOe (100 mT), plus préférentiellement entre 0,6 kOe (60 mT) et 0,8 kOe (80 mT).

De manière surprenante, il est donc aisé de manipuler l'ordre des précurseurs afin d'obtenir des nanocomposites magnétiques ayant les propriétés magnétiques voulues.

L'étape b) du procédé selon l'invention comprend une production hydrothermale et/ou solvothermale.

La production hydrothermale ou solvothermale comprend les diverses techniques de cristallisation de substances à partir de solutions aqueuses à haute température à des pressions de vapeur élevées.

La production hydrothermale ou solvothermale peut être définie comme une réaction chimique hétérogène ou homogène en présence d'un solvant aqueux (production hydrothermale) ou non-aqueux (production solvothermale) ayant lieu à une température proche ou supérieure de la température d'ébullition du solvant. Cela a pour conséquence de générer une pression généralement supérieure à une atmosphère dans un système fermé.

La production hydrothermale/solvothermale permet la production de nanocomposites magnétiques et présente des avantages par rapport aux autres voies de productions traditionnelles telles que les réactions de décomposition thermique réalisées à haute température et sous atmosphère inerte (en ligne "Schlenk"). Effectivement, puisque le dispositif consiste en une enceinte fermée, une pression importante se crée spontanément dans cette enceinte et permet d'augmenter la réactivité entre les précurseurs. Ces précurseurs peuvent cristalliser et former des composites de morphologie et taille bien définies à une température plus basse que la température nécessaire à la réalisation de la même réaction à pression atmosphérique. Ce type de production permet d'atteindre des hautes pressions et des hautes températures grâce à l'enceinte fermée et selon les conditions choisies. Il existe également des réacteurs hydrothermaux dans lesquels une pression extérieure élevée peut être appliquée (i.e. pression exogène) pour renforcer ces conditions. Toutefois, de façon préférée, un procédé de production selon la présente invention ne comporte pas une mise en oeuvre d'une pression exogène.

Cette technique se révèle efficace pour la production de poudre de haute pureté, de haute cristallinité, de distribution de taille et de morphologie contrôlées ; ces caractéristiques ainsi que les caractéristiques magnétiques peuvent être notamment influencées par le temps de réaction, la pression dans l'autoclave, la température de production, la vitesse de chauffage, le taux de basicité b, le taux d'hydrolyse h, la nature du solvant, et la position des ions OH⁻ dans le solvant.

La production hydrothermale ou solvothermale est bien connue de l'état de l'art.

Selon un mode de réalisation, la production solvothermale a pour solvant un composé sélectionné parmi éthylène Glycol (EG), diéthylène Glycol (DEG), polyéthylène Glycol (PEG), Butanol, Butan-2-ol, propanol, propan-2-ol, de préférence le polyol.

Selon un mode de réalisation, le rapport de volume entre solvant et volume de l'autoclave varie de 0,3 à 1 de préférence un rapport sensiblement égal à 0,75, de préférence égal à 0,75.

Selon un mode de réalisation, la production hydrothermale et/ou solvothermale se fait à une pression comprise entre 1 bar et 300 bar, de préférence entre 1 et 100 bar, plus préférentiellement entre 1 et 5 bar, encore plus préférentiellement entre 1 et 3 bar. Selon un mode de réalisation préférée, la production hydrothermale et/ou solvothermale se fait à une pression comprise entre 1,1 bar et 300 bar, de préférence entre 1,1 et 100 bar, plus préférentiellement entre 1,2 et 5 bar, encore plus préférentiellement entre 1,3 et 3 bar.

Selon un mode de réalisation, la production hydrothermale et/ou solvothermale se fait à une température comprise entre 30°C et 350°C, de préférence entre 50°C et 200°C, plus préférentiellement entre 50°C et 150°C, encore plus préférentiellement entre 130°C et 150°C.

Selon un mode de réalisation, la vitesse de chauffage ou de refroidissement pendant la production hydrothermale et/ou solvothermale est comprise entre 1 °C/min et 20 °C/min, de préférence entre 1,5 °C/min et 10 °C/min, plus préférentiellement entre 1,5 °C/min et 2 °C/min.

Selon un mode de réalisation, la durée du palier lors du chauffage est comprise entre 0 min et 168h, de préférence entre 1h et 72h, préférentiellement entre 1h et 6h, plus préférentiellement entre 1h45 et 2h15, et plus préférentiellement 2h.

Selon un mode de réalisation, la production hydrothermale se fait à un taux de d'hydrolyse h (

$$h = \frac{n_{H_2O}}{\sum n_{M'}} = \frac{[H_2O]}{\sum [M']}$$

, M' = M et R) de 0 à 10000, de préférence entre 5 et 5000, plus préférentiellement entre 50 et 500, et encore plus préférentiellement entre 450 et 500.

Selon un mode de réalisation, la production solvothermale se fait à un taux de d'hydrolyse h (

$$h = \frac{n_{H_2O}}{\sum n_{M'}} = \frac{[H_2O]}{\sum [M']}$$

, M' = M et R) de 0 à 100, de préférence entre 1 et 50, plus préférentiellement entre 1 et 20, et encore plus préférentiellement entre 1 et 12.

En outre, le procédé de production selon l'invention peut comporter une étape de lavage. Par exemple, le lavage peut comporter des lavages avec des solvants organiques ou aqueux. Un lavage peut par exemple comporter un lavage avec le même solvant, six lavages avec de l'éthanol et trois lavages avec de l'acétone.

L'invention a aussi pour objet des nanoparticules magnétiques, telles que des nanocomposites magnétiques, à base d'oxyde de fer susceptibles d'être obtenus par un procédé de production selon l'invention. De préférence, l'invention a aussi pour objet des nanoparticules magnétiques, telles que des nanocomposites magnétiques, à base d'oxyde de fer issus d'un procédé de production selon l'invention.

Ces nanocomposites magnétiques comprennent une phase principale et une ou plusieurs phases secondaires $M'_2(OH)_2O_2$, et/ou $R(OH)_3$,

avec : M'= Fe ou M,
M choisi parmi les chlorures métalliques, les nitrates métalliques, les acétates métalliques, les sulfates métalliques et/ou parmi les précurseurs à base de cobalt, de nickel, de zinc et/ou de cuivre, de préférence à base de cobalt, plus préférentiellement un chlorure de cobalt ;
R : La, Ce, Pr, Nd, Pm, Sm, Eu, Gd, Tb, Dy, Ho, Er, Tm, Yb, et Lu

Ces phases permettent de moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur.

L'invention a aussi pour objet une composition comprenant des nanoparticules magnétiques, telles que des nanocomposites magnétiques, à base d'oxyde de fer, susceptibles d'être obtenus par ou, issus du procédé de production selon l'invention.

De préférence, les nanoparticules magnétiques forment des composites (intrinsèques ou extrinsèques) constitués d'une phase principale et d'une ou plusieurs phases secondaires. Ainsi les nanoparticules magnétiques peuvent être appelées des nanocomposites magnétiques.

La phase principale est de préférence un ferrite spinelle de structure cubique à face centrée et de groupe d'espace $Fd\bar{3}m$. De préférence, le ou les phases secondaires est/sont une/des structure(s) cubique(s) à face centrée et hexagonale(s) de groupe d'espace $Fd\bar{3}m$ et $P6\bar{3}/m$ respectivement.

De préférence, les nanoparticules magnétiques ou nanocomposites magnétiques ont un champ coercitif compris entre 10 Oe (1 mT) et 20 kOe (2 T), de préférence entre 0.5 kOe (50 mT) et 10 kOe (1T).

La composition ou les nanocomposites peuvent être utilisés dans une méthode thérapeutique, de préférence dans une méthode d'hyperthermie magnétique.

L'hyperthermie magnétique repose sur le ciblage des cellules cancéreuses avec des nanocomposites magnétiques fonctionnalisés. Une fois les nanoparticules fonctionnalisées, elles ciblent les cellules cancéreuses et s'y attachent via des ligands, l'application d'un champ magnétique alternatif externe à haute fréquence (typiquement de l'ordre de centaines de kHz) avec un champ magnétique très intense (> 1 T) permettant d'engendrer une élévation très localisée de la température. Si cette température peut être maintenue au-dessus du seuil thérapeutique de 42 °C pendant 30 min ou plus, les cellules cibles ou tumorales sont détruites.

L'hyperthermie magnétique repose sur l'utilisation de nanocomposites magnétiques possédant des propriétés magnétiques très intéressantes tels que les nanoferrites doux et/ou semi-durs et/ou durs.

Selon un mode de réalisation, lesdits nanocomposites magnétiques issus de ce procédé d'invention peuvent être fonctionnalisés par du PEG et/ou de l'acide folique dans le procédé de production selon l'invention.

Selon un mode de réalisation, les nanocomposites magnétiques issus de ce procédé d'invention peuvent être greffés par des peptides anti-cancer.

Selon un mode de réalisation, lesdits nanocomposites magnétiques issus de ce procédé d'invention peuvent être greffés par des peptides antibactérien.

Les nanocomposites magnétiques sont de préférence administrés par le moyen d'un support pharmaceutiquement acceptable. Dans un mode de réalisation, les nanocomposites magnétiques selon l'invention sont mélangés dans une suspension liquide ou sont encapsulés dans des microcapsules, qui peuvent ensuite être mélangées avec un milieu biocompatible approprié. Par exemple, les particules magnétiques peuvent être liées dans un matériau de matrice pour former une microcapsule. Les propriétés importantes des microcapsules sont leur densité et leur diamètre. La densité affecte l'efficacité de leur transport par le flux sanguin vers le site d'immobilisation dans le réseau vasculaire des tissus malades tandis que la taille détermine la proximité du point d'immobilisation au tissu malade.

Dans un mode de réalisation, des revêtements biocompatibles peuvent être utilisés pour minimiser l'interaction métallique des particules d'alliage avec des composés biologiques, si nécessaire pour améliorer la biocompatibilité des particules magnétiques.

Dans un mode de réalisation, la composition comprend un matériau polymère. Par exemple, les nanocomposites magnétiques peuvent être dispersés ou encapsulés dans un polymère biocompatible. Par «polymère», on entend que la composition comprend un ou plusieurs oligomères, polymères, copolymères ou mélanges de ceux-ci.

Dans un mode de réalisation, le matériau de matrice comprend un polymère thermoplastique. Des exemples de polymères comprennent l'alcool polyvinylique, le polyéthylèneglycol, l'éthylcellulose, les polyoléfines, les polyesters, les polyamines non peptidiques, les polyamides, les polycarbonates, les polyalcènes, les éthers polyvinyliques, les polyglycolides, les éthers de cellulose, les halogénures de polyvinyle, les polyhydroxyalcanoates, les polyanhydrides, les polystyrènes, les polyétacrylates, les polyéthanescrates etcopolymères et mélanges de ceux-ci.

Pour une utilisation in vivo, le matériau polymère peut être biocompatible et de préférence biodégradable. Des exemples de polymères appropriés comprennent les éthylcelluloses, les polystyrènes, la poly (e-caprolactone), le poly (acide d, 1-lactique) et le poly (acide d, 1-lactique-acide co-glycolique). Le polymère est de préférence un copolymère d'acide lactique et d'acide glycolique (par exemple PLGA).

Dans un mode de réalisation, les nanocomposites magnétiques et un médicament sont encapsulés dans un matériau thermosensible. Lorsque ces nanocomposites magnétiques sont chauffés, la chaleur générée fait fondre l'encapsulant thermosensible, libérant ainsi le médicament transporté, par exemple sur le site de la tumeur ou du traitement, et chauffe la tumeur pour faciliter davantage le traitement au site de la tumeur.

Dans un autre mode de réalisation, la composition comprend en outre un médicament ou un agent radiosensibilisant, comme connu dans l'état de l'art.

Dans un mode de réalisation préféré, le médicament est un agent chimiothérapeutique. Des exemples représentatifs d'agents chimiothérapeutiques connus dans l'art comprennent les platines, telles que le carboplatine et le cisplatine, les taxanes, tels que le docétaxel et le paclitaxel, la gemcitabine, VP16, la mitomycine, l'idoxuridine, les inhibiteurs de topoisomérase 1, tels que l'irinotécan, le topotécan et les camptothécines, les nitrosourées, tels que BCNU, ACNU ou MCNU, méthotrexate, bléomycine, adriamycine, cytoxan et vincristine, cytokines immunomodulatrices, telles que IL2, IL6, IL12 et IL13, et interférons. Certains agents chimiothérapeutiques sont connus pour être potentialisés par chauffage du tissu et / ou de l'agent chimiothérapeutique. Des exemples d'agents chimiothérapeutiques activés par la chaleur ou améliorés par la chaleur comprennent la bléomycine, le BCNU, le cisplatine, le cyclophosphamide, le melphalan, la mitoxantrone, la mitomycine C, le thiotépa, le misonidazole, le 5-thi-D-glucose, l'amphotéricine B, la cystéine, la cystéamine et l'AET. Des exemples représentatifs d'agent radiosensibilisant comprennent le misonidazole, le pimonidazole, le 5-fluorouracile et le 2,4-dinitroimidazole-1-éthanol. L'homme du métier peut sélectionner le ou les agents appropriés pour le patient, le cancer ou l'indication particulière.

Dans un mode de réalisation, la composition comprend un support pharmaceutiquement acceptable approprié. Par exemple, le support peut être un excipient pour injection pharmaceutiquement acceptable. L'excipient pharmaceutiquement acceptable peut être n'importe quel excipient aqueux ou non aqueux connu dans l'état de l'art. Des exemples d'excipients aqueux comprennent des solutions salines physiologiques, des solutions de sucres tels que le dextrose ou le mannitol, et des solutions tamponnées pharmaceutiquement acceptables, et des exemples d'excipients non aqueux comprennent les huiles végétales fixes, la glycérine, les polyéthylèneglycols, les alcools et l'oléate d'éthyle. L'excipient peut en outre comprendre des conservateurs antibactériens, des antioxydants, des agents de tonicité, des tampons, des stabilisants ou d'autres composants.

Généralement, la méthode d'hyperthermie magnétique consiste à placer le matériau magnétique sur un site destiné au chauffage, puis à exposer le matériau magnétique à un champ magnétique alternatif pour générer une chaleur d'hystérésis pendant une période de temps efficace pour un résultat particulier. Alors que le site serait souvent chez un patient pour des applications médicales, le matériel facultatif pourrait être utilisé dans des applications industrielles ou non médicales.

Dans un mode de réalisation, les microcapsules comprenant les nanocomposites magnétiques comprennent en outre un ou plusieurs médicaments pour la libération. Dans un mode de réalisation, le médicament est encapsulé dans le même matériau de matrice encapsulant les particules magnétiques. Dans un procédé, la libération du médicament est essentiellement indépendante du chauffage des particules magnétiques. Dans un autre procédé, la libération de médicament est augmentée ou facilitée par le chauffage des particules magnétiques. Le chauffage peut fonctionner pour (1) augmenter la porosité du matériau de matrice, (2) augmenter la vitesse de diffusion moléculaire à travers le matériau de matrice, (3) améliorer la biodégradation ou la dissolution du matériau de matrice, ou (4) effectuer des combinaisons de ceux-ci.

Par exemple, dans un mode de réalisation, la composition comprend des nanocomposites magnétiques qui sont enrobés ou dispersés dans un matériau de matrice polymère biocompatible (par exemple, sous la forme de plus grosses microparticules ou nanoparticules) qui contient le médicament, et un chauffage magnétique dilate le polymère pour permettre au médicament de se diffuser sur le site de la tumeur.

Les compositions selon l'invention peuvent également être utilisées dans d'autres traitements d'hyperthermie en plus du traitement du cancer. Par exemple, l'hyperthermie magnétique peut être utilisée dans le soulagement de la douleur, le contrôle des saignements ou dans le traitement de l'hypertrophie prostatique ou du psoriasis.

La composition biocompatible peut être délivrée au tissu malade chez un patient par tout moyen connu dans l'art. Des exemples représentatifs de voies d'administration appropriées comprennent les administrations intratumorales, péritumorales et intravasculaires (par exemple, injection intra-artérielle, intrapéritonéale, sous-cutanée ou intrathécale). Dans un mode de réalisation, la composition biocompatible est délivrée au tissu malade via l'apport sanguin artériel ou veineux.

Le champ magnétique peut être induit à l'aide d'aimants simples ou d'un autre équipement bien connu dans l'art. La force de champ magnétique nécessaire pour un alignement efficace des nanotubes peut varier en fonction, par exemple, de la quantité de matériau magnétique attaché aux nanotubes, de la viscosité du milieu fluide et de la distance entre le champ magnétique et le milieu fluide. Le principe de base qui permet à cette méthode de fonctionner est un équilibre entre la force magnétique générée par le champ appliqué (qui est fonction de la susceptibilité magnétique, du volume du matériau magnétique, du champ magnétique et du gradient de champ magnétique) et le force de résistance (qui est directement proportionnelle à la résistance visqueuse du milieu fluide).

Dans un mode de réalisation, la force du champ magnétique est comprise entre 0,5 et 3 T et plus préférentiellement entre 0,5 et 1 T.

EXEMPLES

Exemple 1 :

Influence du chauffage préalable des précurseurs.

Un procédé de production de nanoparticules magnétiques selon l'invention a été réalisé et les nanoparticules ainsi produites ont été caractérisées.

Le réacteur utilisé pendant la production hydrothermale est « PARR 5500 Series compact reactor » constitué : d'un autoclave de 300 mL en acier inoxydable, d'un seau en téflon de 250 mL, d'un agitateur mécanique VWR VO5 40 digital, et d'un contrôleur Equilabo 4848.

Le volume total du solvant utilisé ($H_2O$) est de 150 mL pour un volume total de 200 mL.

Le taux de basicité est fixé à 7.

Le taux d'hydrolyse est supérieur à 450.

Le chauffage de l'autoclave a été effectué à une vitesse de montée comprise entre de 2 et 3 °C.min$^{-1}$. La température de production de 145 °C est maintenue pendant 2 heures. À cette température, la pression est comprise entre 1 et 2 bar. À l'issue de ce palier, l'autoclave est refroidi jusqu'à la température ambiante à la même vitesse que celle du chauffage.

La production s'est déroulée sous agitation mécanique à 300 rpm en utilisant un système d'agitation d'hélices à 4 pâles.

Exemple 1a) Sans chauffage préalable des précurseurs et en choisissant l'ordre d'introduction des précurseurs (dans l'autoclave) nommé MRBF Avec $CoCl_2.6H_2O$ (M) ; $PrCl_3$ (R) ; NaOH (B); $FeCl_3.6H_2O$ (F) :

Pour les nanoparticules ainsi produites, on observe que le champ coercitif, $H_c$, est supérieur à 515 mT pour x = 0 (figure 1a) et atteint une valeur de 616 mT pour x = 0,15 (figure 1a). L'aimantation à saturation, $M_s$, est supérieure à 32 emu.g$^{-1}$ (x = 0 ; figure 1a) et atteint une valeur de 63 emu.g$^{-1}$ (x = 0,15 ; figure 1a). Le produit énergétique $(BH)_{max}$ est supérieur à 0,27 MGOe (x = 0 ; figure 1b) et atteint une valeur de 1,31 MGOe (x = 0,15 ; figure 1a).

Dans ces conditions de production, la composition est multifonctionnelle. Les nanoparticules sont magnétiquement dures avec ou sans praséodyme.

Le changement de caractère magnétique (doux à dur) est expliqué par la présence de phases secondaires $M'_2(OH)_2O_2$ et $R(OH)_3$ (M' : M ou Fe et R : Pr, figure 2).

Exemple 1b) Le même procédé fut réalisé mais cette fois avec un chauffage préalable des précurseurs.

Chaque précurseur a été préalablement dissous dans l'eau à une température voisine de 70 °C en utilisant une plaque chauffante.

Cette fois-ci, on observe que la valeur de $H_c$ est supérieure à 350 mT pour x = 0 (figure 4a) et atteint une valeur de 707 mT pour x = 0,15 (figure 4a). L'aimantation à saturation, $M_s$, est supérieure à 49 emu.g$^{-1}$ (x = 0 ; figure 4a) et atteint une valeur de 55,7 emu.g$^{-1}$ (x = 0,075 ; figure 4a). Le produit énergétique $(BH)_{max}$ est supérieur à 0,48 MGOe (x = 0 ; figure 4b) et atteint une valeur de 1,36 MGOe (x = 0,1 ; figure 4b).

Dans ces conditions de production, le matériau est aussi magnétiquement dur mais on observe une différence de coercivité de 165 mT pour x = 0 et de +91 mT pour x= 0,15 entre l'exemple 1a) et 1b) sachant que la seule différence est le chauffage préalable des précurseurs.

L'augmentation du champ coercitif (figure 4a) est due à l'effet du couplage entre le ferrite spinelle et les phases secondaires. En effet, on observe un épaulement dû à la présence des phases secondaires $Fe_2(OH)_2O_2$ et $Pr(OH)_3$. Cet effet est dû au fait que ces phases secondaires sont magnétiquement plus douces que la phase spinelle du ferrite.

Exemple 2 :

Influence de l'ordre d'introduction des précurseurs.

Le même procédé que dans l'exemple 1 b) ci-dessus (avec chauffage préalable) fut réalisé à la seule différence que l'ordre d'introduction des précurseurs était différent.

Cette fois-ci l'ordre d'introduction des précurseurs dans l'autoclave fut RMFB : $PrCl_3$ (R) ; $CoCl_2.6H_2O$ (M) ; $FeCl_3.6H_2O$ (F) ; NaOH (M).

Pour les nanoparticules ou nanocomposites magnétiques ainsi produits, on observe que la valeur de $H_c$ des ferrites de cobalt obtenus après production de composition $MFe_{2-x}R_xO_4$ (M : Co et R : Pr ; 0 < x < 2) est inférieure à 164 mT pour x = 0,025 (figure 3a) ; la valeur de $(BH)_{max}$ est inférieure à 0,46 MGOe (x = 0,025; figure 3b) ; et la valeur de $M_s$ est plus faible que 63 emu.g$^{-1}$ (x = 0.025; figure 3a).

Dans ces conditions de production, le matériau est magnétiquement doux (x = 0 ; x = 0.075 ; x = 0.1) ou semidur (x = 0.025 ; x = 0.05). On observe des différences notables entre la coercivité des nanocomposites de l'exemple 1 b) et celle de l'exemple 2 bien que la seule différence soit l'ordre d'introduction des précurseurs.

Nous pouvons conclure que l'ordre d'introduction des précurseurs (avant le lancement de la production hydrothermale/solvothermale) influe sur les propriétés des ferrites obtenus à la fin de la production et permet donc de fournir un procédé de production multifonctionnelle de nanocomposites magnétiques.

Exemple 3 :

Influence de la concentration en précurseur.

Le même procédé que dans l'exemple 1 a) ci-dessus (sans chauffage préalable) fut réalisé avec différentes concentrations de chlorure de cobalt.

L'influence de la concentration du chlorure de cobalt pour l'échantillon $MFe_{1,8}R_{0,2}O_4$ (M : Co et R : Pr, figure 5a) a montré que le champ coercitif est optimal pour une concentration de 0,149 mol.L$^{-1}$ de l'ordre de 611 mT. Le produit énergétique $(BH)m_{ax,}$ est de 1,54 MGOe (figure 5b) et l'aimantation à saturation, $M_s$, a pour valeur 63,4 emu.g$^{-1}$ (figure 5a).

La concentration du chlorure de cobalt influe donc aussi sur les propriétés des ferrites obtenus à la fin de la production.

Exemple 4 :

Influence de l'hydratation d'au moins un précurseur.

Le même procédé que dans l'exemple 1 a) ci-dessus (sans chauffage préalable) fut réalisé avec un chlorure de fer ($FeCl_3$) soit anhydre, soit hydraté.

On observe que le champ coercitif augmente pour l'utilisation du $PrCl_3$ anhydre. Il passe de 535 mT à 575 mT.

Les valeurs de l'aimantation à saturation et du produit énergétique *(BH)$_{max}$* restent inchangés et égalent à 60 emu.g$^{-1}$ et 1,1 MGOe respectivement (figure 6a et 6b).

L'hydratation ou non des précurseurs influe donc aussi sur les propriétés des ferrites obtenus à la fin de la production.

Exemple 5 :

Influence du chauffage préalable des précurseurs.

Pour le même procédé que l'exemple 4, le chauffage des précurseurs avant la production a montré l'augmentation du champ coercitif jusqu'à 673 mT, l'augmentation du produit énergétique (BH)max égale à 1,5 MGOe ainsi que l'augmentation de l'aimantation à saturation jusqu'à 62 emu.g$^{-1}$ (figure 6a et 6b).

Le chauffage préalable des précurseurs influe donc aussi sur les propriétés des ferrites obtenus à la fin de la production (voir aussi exemple 1).

Exemple 6 :

Influence des précurseurs de terres rares.

Pour le même procédé que l'exemple 4 et 5, l'augmentation du taux en Praséodyme a montré l'augmentation du champ coercitif jusqu'à 712 mT (figure 6a) avec la diminution de l'aimantation à saturation et du produit énergétique (BH)max jusqu'à 54 emu.g$^{-1}$ (figure 6a) et 1,35 MGOe (figure 6b) respectivement.

Nous concluons aussi que la substitution du ferrite de cobalt par le praséodyme (Pr) a une influence sur les propriétés structurales et magnétiques. La substitution d'au moins un précurseur métallique (ici le ferrite de cobalt) par un précurseur de terres rares (ici le praséodyme) influe donc aussi sur les propriétés des ferrites obtenus à la fin de la production.

Exemple 7

Influence de l'ordre d'introduction des précurseurs.

Le même procédé que l'exemple 1, avec chauffage préalable des précurseurs et pour un taux de substitution en Pr égal à 0,025 et 0,075, l'étude de l'influence de l'ordre d'introduction des précurseurs avant production hydro(solvothermale) a montré que, pour une même composition, la catégorie magnétique des nanocomposites varie de doux à dur en passant par semi-dur (voir figure 7a et 7b). La figure 7a présente les cycles d'hystérésis pour trois ordres MRBF, RFBM, et RMFB et pour la composition CoFe$_{1,975}$Pr$_{0,025}$O$_4$·

Ici PrCl$_3$ (R) ; CoCl$_2$.6H$_2$O (M) ; FeCl$_3$.6H$_2$O (F) ; NaOH (M).

On peut observer les trois types de catégories magnétiques pour les différents ordres :

- MRBF (nanocomposites durs, Hc = 5,83 kOe (583 mT) > 5 kOe (500 mT) ;
- RFBM (nanocomposites doux, Hc = 0,58 kOe (58 mT) < 1 kOe (100 mT) ;
- Et RMFB (nanocomposites semi-durs, 1 kOe (100 mT) < Hc = 1,64 kOe (164 mT) < 5 kOe (500 mT).

La figure 7b à droite présente aussi les cycles d'hystérésis pour les ordres MRBF, RMFB, FRBM, BFRM, MBRF. En augmentant le taux en Praséodyme à xPr = 0,075, on obtient la catégorie magnétique d'un matériau magnétique dur avec Hc = 651 mT pour l'ordre MRBF et la même catégorie d'un matériau magnétique doux avec Hc = 85 mT pour l'ordre RMFB.

On observe donc que pour le même procédé, l'ordre d'introduction des précurseurs influe beaucoup sur les propriétés magnétiques des nanocomposites produites (voir tableaux 1 et 2 ci-dessous).

[tableau 1]

| CoFe$_{1,975}$Pr$_{0.025}$O$_4$ | | | | |
|---|---|---|---|---|
| Ordre | H$_c$ (mT) | M$_s$ (emu/g) | M$_r$ (emu/g) | M$_r$/M$_s$ |
| MRBF | 583 | 54,4 | 36,7 | 0,67 |
| RFBM | 58,1 | 51,3 | 17 | 0,33 |
| RMFB | 164 | 54,4 | 29,2 | 0,54 |

[tableau 2]

| CoFe$_{1,925}$Pr$_{0,075}$O$_4$ | | | | |
|---|---|---|---|---|
| Ordre | H$_c$ (mT) | M$_s$ (emu/g) | M$_r$ (emu/g) | M$_r$/M$_s$ |
| MRBF | 651 | 55,7 | 38,3 | 0,69 |
| RMFB | 85 | 56,6 | 22,3 | 0,39 |
| FRBM | 277 | 55,4 | 33,1 | 0,6 |
| BFRM | 437 | 53,2 | 31,1 | 0,58 |
| MBRF | 398 | 51,9 | 30 | 0,58 |

Exemple 8

Influence des précurseurs de terres rares.

Pour le même procédé que l'exemple 7, la hausse du taux en Pr a montré que la substitution d'au moins un précurseur métallique (ici le ferrite de cobalt) par un précurseur de terres rares (ici le praséodyme) influe aussi sur les propriétés des ferrites obtenus à la fin de la production (voir tableaux 1 et 2 ci-dessus).

Autres données

Dans le cadre de l'exemple 1a, le tableau 3 ci-dessous présente les propriétés magnétiques des ferrites de cobalt de composition MFe$_{2-x}$R$_x$O$_4$ (M : Co et R : Pr ; 0 < x < 0,2) synthétisés à 145 °C pendant 2h, pour un taux de basicité de 7, pour un taux d'hydrolyse supérieur à 450, pour un ordre d'introduction des précurseurs MRBF dans l'autoclave, et sans chauffage préalable des précurseurs.

[Tableau 3]

| x$_{Pr}$ | H$_c$ (mT) | M$_s$ ( emu.g$^{-1}$ ) | M$_r$ ( emu.g$^{-1}$ ) | M$_r$/M$_s$ | BH$_{max}$(MGOe) |
|---|---|---|---|---|---|
| 0 | 515 | 31,6 | 17,2 | 0,54 | 0,26 |
| 0,05 | 599 | 62,9 | 37,6 | 0,6 | 1,22 |
| 0,1 | 572 | 57,9 | 34,8 | 0,6 | 1.01 |
| 0,15 | 616 | 62,6 | 39,1 | 0,62 | 1,31 |
| 0,2 | 603 | 53,2 | 32,3 | 0,61 | 0,92 |

Dans le cadre de l'exemple 2, le tableau 4 ci-dessous présente les propriétés magnétiques des ferrites de cobalt de composition MFe$_{2-x}$R$_x$O$_4$ (M : Co et R : Pr ; 0 < x < 0,1) synthétisé à 145 °C pendant 2h, pour un taux de basicité de 7, pour un taux d'hydrolyse supérieur à 450, pour un ordre d'introduction des précurseurs RMFB dans l'autoclave, avec chauffage préalable des précurseurs.

[Tableau 4]

| x$_{Pr}$ | H$_c$ (mT) | M$_s$ (emu.g$^{-1}$) | M$_r$ (emu.g$^{-1}$) | M$_r$/M$_s$ | (BH)$_{max}$ (MGOe) |
|---|---|---|---|---|---|
| 0 | 74,6 | 62,3 | 22 | 0,35 | 0,179 |
| 0,025 | 164 | 54,4 | 29,2 | 0,54 | 0,468 |
| 0,05 | 79,9 | 50,6 | 19,5 | 0,39 | 0,176 |
| 0,075 | 84,8 | 56,6 | 22,3 | 0,39 | 0,216 |
| 0,1 | 63,7 | 59 | 21,4 | 0,36 | 0,173 |

Dans le cadre de l'exemple 1b, le tableau 5 ci-dessous présente les propriétés magnétiques des ferrites de cobalt de composition MFe$_{2-x}$R$_x$O$_4$ (M : Co et R : Pr ; 0 < x < 0,1) synthétisé à 145 °C pendant 2h, pour un taux de basicité de 7, pour un taux d'hydrolyse supérieur à 450, pour un ordre d'introduction des précurseurs MRBF dans l'autoclave, avec chauffage préalable des précurseurs.

[Tableau 5]

| $x_{Pr}$ | $H_c$ (mT) | $M_s$ (emu.g⁻¹) | $M_r$ (emu.g⁻¹) | $M_r/M_s$ | $(BH)_{max}$ (MGOe) |
|---|---|---|---|---|---|
| 0 | 350 | 48,8 | 27,2 | 0,56 | 0,482 |
| 0,025 | 583 | 54,3 | 36,7 | 0,68 | 0,943 |
| 0,05 | 613 | 54,1 | 36,7 | 0,68 | 1,129 |
| 0,075 | 651 | 55,7 | 38,3 | 0,69 | 1,361 |
| 0,1 | 653 | 52,8 | 36,1 | 0,68 | 1,216 |

Dans le cadre de l'exemple 3, le tableau 6 ci-dessous présente les propriétés magnétiques du ferrite de cobalt de composition $MFe_{1,8}R_{0,2}O_4$ (M : Co et R : Pr) pour différentes concentrations de chlorure de cobalt synthétisé à 145 °C pendant 2h, pour un taux de basicité de 7, pour un taux d'hydrolyse supérieur à 450, et pour un ordre d'introduction des précurseurs MRBF dans l'autoclave.

[Tableau 5]

| [Co] (mol.L⁻¹) | $H_c$ (mT) | $M_s$ (emu.g⁻¹) | $M_r$ (emu.g⁻¹) | $M_r/M_s$ | $(BH)_{max}$ (MGOe) |
|---|---|---|---|---|---|
| 0,119 | 561 | 58,1 | 34,2 | 0,59 | 0,962 |
| 0,133 | 565 | 56 | 32,2 | 0,58 | 0,847 |
| 0,149 | 611 | 63,4 | 41,2 | 0,65 | 1,538 |
| 0,17 | 568 | 56,2 | 33 | 0,59 | 0,935 |

Dans le cadre de l'exemple 4, le tableau 7 ci-dessous présente les propriétés magnétiques du ferrite de cobalt de composition $MFe_{2-x}R_xO_4$ (M : Co et R : Pr ; x = 0,15 et x = 0,3) pour des échantillons possédant un précurseur de $FeCl_3$ hydraté ou non, avec ou sans chauffage préalable des précurseurs, synthétisé à 145 °C pendant 2h, pour un taux de basicité de 7, pour un taux d'hydrolyse supérieur à 450, et pour un ordre d'introduction des précurseurs MRBF dans l'autoclave.

[Tableau 7]

| Échantillons | $H_c$ (mT) | $M_s$ (emu.g⁻¹) | $M_r$ (emu.g⁻¹) | $M_r/M_s$ | $(BH)_{max}$ (MGOe) |
|---|---|---|---|---|---|
| $FeCl_3$ Anhydre($x_{Pr}$=0,15) | 575 | 59,6 | 35,8 | 0,6 | 1,053 |
| $FeCl_3$, $6H_2O$ ($x_{Pr}$=0,15) | 535 | 60,2 | 35,9 | 0,6 | **1,104** |
| $FeCl_3$ Anhydre, △ ($x_{Pr}$=0,15) | 673 | 62 | 40,3 | 0,65 | 1,501 |
| $FeCl_3$ Anhydre, △ ($x_{Pr}$=0,30) | 712 | 54 | 36,4 | 0,67 | 1,35 |

## Revendications

**1.** Procédé de production de nanocomposites magnétiques à base d'oxyde de fer, lesdits nanocomposites magnétiques présentant une catégorie magnétique donnée, la catégorie magnétique donnée étant par exemple sélectionnée parmi matériau magnétique doux, ou matériau magnétique semi-dur, ou matériau magnétique dur, ledit procédé comprenant les étapes suivantes :

    a0) dissolutions séparées :

        - d'un précurseur à base de fer (F) dans un solvant aqueux et/ou solvant organique dans un premier contenant,

- d'au moins un précurseur métallique (M) autre qu'un précurseur à base de fer dans un solvant dans un deuxième contenant,
- optionnellement d'au moins un précurseur de terres rares (R),
- d'une base (B) dans un solvant dans un troisième contenant ;

a) introduction à température ambiante du précurseur à base de fer (F) dissous et de l'au moins un précurseur métallique (M) autre qu'un précurseur à base de fer dissous, d'au moins une base (B) dissoute, et optionnellement d'au moins un précurseur de terres rares (R) dissous, dans un ordre donné d'introduction dans un autoclave, la combinaison de ces précurseurs dissous avec la base (B) entrainant une co-précipitation desdits précurseurs, l'ordre d'introduction de la base (B) dissoute dans l'autoclave par rapport aux introductions des précurseurs dissous permettant d'obtenir différents précipités,
l'ordre donné d'introduction, lors de l'étape a), des solutions de l'étape a0) dans l'autoclave est sélectionné parmi :

- lorsque les précurseurs dissous ne comportent pas de précurseur de terres rares, l'un des ordres d'introduction suivants : MBF, MFB, FMB, FBM, BMF, ou BFM, de préférence MBF ou MFB, ;
Ou
- lorsque au moins un précurseur de terres rares dissous est généré à l'étape a0), l'un des ordres d'introduction suivants :
MRFB, MRBF, MFRB, MFBR, MBFR, MBRF, RMFB, RMBF, RFMB, RFBM, RBFM, RBMF, BRFM, BRMF, BFMR, BFRM, BMFR, BMRF, FRBM, FRMB, FMRB, FMBR, FBRM, ou FBMR, de préférence MRBF, RMFB, FRBM, BFRM, ou MBRF, plus préférentiellement MRBF ou RMFB ;

Avec :

- F est un précurseur à base de fer,
- M est le ou les précurseur(s) métallique(s) autre(s) qu'un précurseur à base de fer, et M est choisi parmi les chlorures métalliques, les nitrates métalliques, les acétates métalliques, les sulfates métalliques et/ou parmi les précurseurs à base de cobalt, de nickel, de zinc et/ou de cuivre, de préférence à base de cobalt, plus préférentiellement un chlorure de cobalt ;
- B est la ou les base(s) ;
- R est le ou les précurseur(s) de terres rares

b) production hydrothermale et/ou solvothermale ;
de façon à obtenir des nanocomposites magnétiques qui présentent une phase principale et une ou plusieurs phases secondaires $M'_2(OH)_2O_2$ et/ou $R(OH)_3$, lesdits nanocomposites magnétiques présentant une catégorie magnétique donnée qui est fonction de l'ordre d'introduction donné des précurseurs dissous par rapport à la base B lors de l'étape a),
avec M'= Fe ou M
c) étape de lavage des nanocomposites magnétiques.

2. Procédé de production selon la revendication 1, dans lequel le procédé ne comporte pas d'étape de calcination des nanocomposites magnétiques.

3. Procédé de production selon l'une des revendications 1 à 2, dans lequel, dans l'étape a0) on chauffe les contenants à une température donnée inférieure à la température d'ébullition du solvant, puis on attend le refroidissement à température ambiante avant de réaliser l'étape a).

4. Procédé de production selon l'une des revendications 1 à 3, dans lequel les nanocomposites magnétiques sélectionnés présentent respectivement de 85% en masse à 97% en masse de phase principale et respectivement de 15% en masse à 3% en masse de phase secondaire.

5. Procédé de production selon l'une des revendications 1 à 4, dans lequel la phase principale étant un ferrite spinelle de formule brute $Co_xNi_yZn_zCu_uMn_vAg_tFe_{2-w}R_wO_4$,
avec

$$x+y+z+u+v+t = 1$$

R : La, Ce, Pr, Nd, Pm, Sm, Eu, Gd, Tb, Dy, Ho, Er, Tm, Yb, et Lu
w compris entre 0 et 2.

6. Procédé de production selon l'une des revendications 1 à 5, dans lequel la production hydrothermale et/ou solvothermale est réalisée à un taux de basicité compris entre 0 et 100, de préférence entre 5 et 25, plus préférentiellement entre 6 et 8.

7. Procédé de production selon l'une des revendications 1 à 6, dans lequel le précurseur à base de fer et/ou au moins un précurseur métallique autre que le précurseur à base de fer est/sont utilisé(s) dans sa/leur forme anhydre.

8. Procédé de production selon l'une quelconque des revendications 1 à 7, où le ou les précurseur(s) de terres rares (R) est/sont sélectionné(s) parmi les chlorures de terres rares, les nitrates de terres rares, les acétates de terres rares, les sulfates de terres rares et/ou parmi le lanthane, le cérium, le praséodyme, le néodyme, le prométhium, le samarium, l'europium, le gadolinium, le terbium, le dysprosium, l'holmium, l'erbium, le thulium, l'ytterbium, le lutécium, le scandium, et l'yttrium, de préférence le praséodyme.

9. Procédé de production selon l'une quelconque des revendications 1 à 8, dans lequel différentes concentrations des précurseurs sont utilisées lors de l'étape a0) pour moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur.

10. Nanocomposites magnétiques comprenant une phase principale et une ou plusieurs phases secondaires $M'_2(OH)_2O_2$, et/ou $R(OH)_3$ qui permettent de moduler la catégorie magnétique des nanocomposites magnétiques, la catégorie magnétique des nanocomposites magnétiques pouvant de préférence correspondre à : matériau magnétique doux, ou matériau magnétique semi-dur, ou matériau magnétique dur,
Avec :

• M'= Fe ou M,
• M choisi parmi les chlorures métalliques, les nitrates métalliques, les acétates métalliques, les sulfates métalliques et/ou parmi les précurseurs à base de cobalt, de nickel, de zinc et/ou de cuivre, de préférence à base de cobalt, plus préférentiellement un chlorure de cobalt ;
• R : La, Ce, Pr, Nd, Pm, Sm, Eu, Gd, Tb, Dy, Ho, Er, Tm, Yb, et Lu ; qui présentent respectivement de 85% en masse à 97% en masse de phase principale et respectivement de 15% en masse à 3% en masse de phase secondaire permettant de moduler la catégorie magnétique des nanocomposites magnétiques, et pour lesquels la phase principale est le ferrite spinelle de formule brute $Co_xNi_yZn_zCu_uMn_vAg_tFe_{2-w}R_wO_4$ avec

$$x+y+z+u+v+t = 1$$

R : La, Ce, Pr, Nd, Pm, Sm, Eu, Gd, Tb, Dy, Ho, Er, Tm, Yb, et Lu
w compris entre 0 et 2.

11. Nanocomposites magnétiques selon la revendication 10, ayant un champ coercitif de coercivité compris entre 796A/m et 1592kA/m (10Oe - 20kOe), de préférence entre 39.8kA/m à 796kA/m (0.5kOe - 10kOe), de préférence entre 397.9kA/m à 796kA/m (5kOe - 10kOe).

12. Nanocomposites magnétiques selon l'une des revendications 10 et 11, présentant

- un champ coercitif (*Hc*) supérieur à 397.9kA/m qui correspond à la formule chimique suivante : $MFe_{2-x}R_xO_4$ (M : Co et R : Pr ; $0 \le x \le 0,2$ ) et de préférence est obtenu :

• à un taux de basicité, b, égal à 7
• à un taux d'hydrolyse, h, supérieur à 450
• sans chauffage préalable des solutions de précurseurs dissoutes,
• avec l'ordre d'introduction des précurseurs dans l'autoclave suivant : MRBF (M : Co ; B : NaOH ; F : Fe ; et R : Pr) ;

- un champ coercitif (*Hc*) supérieur à 238.7kA/m qui correspond à la formule chimique suivante : $MFe_{2-x}R_xO_4$

(M : Co et R : Pr ; $0 \leq x \leq 0,2$ ) et de préférence est obtenu :

- à un taux de basicité égal à 7,
- à un taux d'hydrolyse, h, supérieur à 450,
- avec un chauffage préalable, de préférence à 70 °C, des solutions de précurseurs dissoutes,
- avec l'ordre d'introduction des précurseurs dans l'autoclave suivant : MRBF (M : Co ; B : NaOH ; F : Fe ; et R : Pr) ;

- un champ coercitif ($Hc$) inférieur à 143.2kA/m qui correspond à la formule chimique suivante : $MFe_{2-x}R_xO_4$ (M : Co et R : Pr ; $0 \leq x \leq 0,1$ ) et de préférence est obtenu :

- à un taux de basicité égal à 7,
- à un taux d'hydrolyse, h, supérieur à 450,
- avec un chauffage préalable, de préférence à 70 °C, des solutions de précurseurs dissoutes,
- avec l'ordre d'introduction des précurseurs dans l'autoclave suivant : RMBF (M : Co ; B : NaOH ; F : Fe ; et R : Pr) ;

- un champ coercitif ($Hc$) supérieur à 437.7kA/m qui correspond à la formule chimique suivante : $MFe_{1,8}R_{0,2}O_4$ (M : Co et R : Pr) et de préférence est obtenu :

- à un taux de basicité égal à 7,
- à un taux d'hydrolyse, h, supérieur à 450,
- sans chauffage préalable des solutions de précurseurs dissoutes,
- avec l'ordre d'introduction des précurseurs suivant : MRBF (M : Co ; B : NaOH ; F : Fe ; et R : Pr) ;

- un champ coercitif ($Hc$) entre 413.8 et 429.7kA/m ($FeCl_3.6H_2O$) ou respectivement entre 445.6 et 461.5kA/m ($FeCl_3$ anhydre), qui correspond à la formule chimique suivante : $MF_{1,85}R_{0,15}O_4$ (M : Co et R : Pr) et de préférence est obtenu :

- à un taux de basicité égale à 7,
- à un taux d'hydrolyse, h, supérieur à 450,
- avec l'utilisation de $FeCl_3.6H_2O$ ou respectivement de $FeCl_3$ anhydre,
- sans chauffage préalable des solutions de précurseurs dissoutes,
- avec l'ordre d'introduction des précurseurs suivant : MRBF (M : Co ; B : NaOH ; F : Fe ; et R : Pr) ;

- un champ coercitif ($Hc$) compris entre 525.2kA/m et 541.1kA/m (xPr = 0,15) et compris entre 549.1 et 580.9kA/m (xPr = 0,30) qui correspond à la formule chimique suivante : $MFe_{2-x}R_xO_4$ (M : Co et R : Pr ; x= 0,15 ; et x = 0,30) et de préférence est obtenu :

- à un taux de basicité égal à 7,
- à un taux d'hydrolyse, h, supérieur à 450,
- avec l'utilisation de $FeCl_3$ anhydre,
- avec l'ordre d'introduction des précurseurs suivant : MRBF (M : Co ; B : NaOH ; F : Fe ; et R : Pr),
- avec un chauffage préalable, de préférence à 70 °C, des solutions de précurseurs dissoutes ;

- un champ coercitif ($Hc$) compris entre 413.8 et 437.7kA/m qui correspond à la formule chimique suivante : $MFe_{1,85}R_{0,15}O_4$ (M : Co et R : Pr) et de préférence est obtenu :

- à un taux de basicité égale à 7,
- à un taux d'hydrolyse, h, supérieur à 450,
- avec l'utilisation de $FeCl_3$ anhydre,
- sans chauffage préalable des solutions de précurseurs dissoutes,
- avec l'ordre d'introduction des précurseurs suivant : MRBF (M : Co ; B : NaOH ; F : Fe ; et R : Pr) ;

- un champ coercitif ($Hc$) compris entre 517.3 et 541.1kA/m qui correspond à la formule chimique suivante : $MFe_{1,85}R_{0,15}O_4$ (M : Co et R : Pr) et de préférence est obtenu :

- à un taux de basicité égal à 7,

- à un taux d'hydrolyse, h, supérieur à 450,
- avec l'utilisation de $FeCl_3$ anhydre,
- avec un chauffage préalable, de préférence à 70 °C, des solutions de précurseurs dissoutes,
- avec l'ordre d'introduction des précurseurs suivant : MRBF (M : Co ; B: NaOH ; F: Fe ; et R : Pr) ;

- un champ coercitif (*Hc*) compris entre 43.8 et 51.7kA/m (RFBM), compris entre 119.4 et 135.3kA/m (RMFB), et compris entre 453.6 et 469.5kA/m (MRBF) qui correspond à la formule chimique suivante : $MFe_{1,975}R_{0,025}O_4$ (M : Co et R : Pr) et de préférence est obtenu :

- à un taux de basicité égal à 7,
- à un taux d'hydrolyse, h, supérieur à 450,
- avec l'ordre d'introduction des précurseurs suivant : RFBM, RMFB, ou MRBF (M : Co ; B: NaOH ; F: Fe ; et R: Pr),
- avec chauffage préalable, de préférence à 70 °C, des solutions de précurseurs dissoutes ;
  ou,

- un champ coercitif (*Hc*) compris entre 59.7 et 71.6kA/m (MRBF) et compris entre 509.3 et 525.2kA/m (MRBF) qui correspond à la formule chimique suivante : $MFe_{1,925}R_{0,075}O_4$ (M : Co et R : Pr) et de préférence est obtenu :

- à un taux de basicité égal à 7,
- à un taux d'hydrolyse, h, supérieur à 450,
- avec les ordres d'introduction des précurseurs suivants: MRBF, RMFB, FRBM, BFRM, ou MBRF (M : Co ; B : NaOH ; F : Fe ; et R : Pr),
- avec chauffage préalable, de préférence à 70 °C, des solutions de précurseurs dissoutes.

13. Utilisation des nanocomposites magnétiques selon l'une des revendications 10 à 12, dans un ferrofluide, un fluide magnétorhéologique un blindage électromagnétique, et/ou pour le traitement des eaux ou des sols.

**Patentansprüche**

1. Verfahren zur Herstellung von magnetischen Nanoverbundwerkstoffen auf der Basis von Eisenoxid, wobei die magnetischen Nanoverbundwerkstoffe eine gegebene magnetische Kategorie aufweisen, wobei die gegebene magnetische Kategorie beispielsweise aus weichmagnetischem Material oder halbhartmagnetischem Material, hartmagnetischem Material ausgewählt ist, wobei das Verfahren die folgenden Schritte umfasst:

   a0) getrennte Auflösungen:

   - von einem Vorläufer auf Eisenbasis (F) in einem wässrigen Lösungsmittel und/oder organischen Lösungsmittel in einem ersten Behälter,
   - von mindestens einem metallischen Vorläufer (M), der kein Vorläufer auf Eisenbasis ist, in einem Lösungsmittel in einem zweiten Behälter,
   - optional von mindestens einem Vorläufer der Seltenen Erden (R),
   - von einer Base (B) in einem Lösungsmittel in einem dritten Behälter;

   a) Einbringen des gelösten Vorläufers auf Eisenbasis (F) und des mindestens einen gelösten metallischen Vorläufers (M), der kein Vorläufer auf Eisenbasis ist, mindestens einer gelösten Base (B) und optional mindestens eines gelösten Vorläufers der Seltenen Erden (R) bei Raumtemperatur in einer gegebenen Reihenfolge in einen Autoklav, wobei die Kombination dieser gelösten Vorläufer mit der Base (B) zu einer Co-Präzipitation der Vorläufer führt, wobei es die Reihenfolge des Einbringens der gelösten Base (B) in den Autoklav im Verhältnis zu den Einbringungen der gelösten Vorläufer gestattet, verschiedene Präzipitate zu erhalten, wobei die gegebene Reihenfolge, in der in Schritt a) die Lösungen aus Schritt a0) in den Autoklav eingebracht werden, ausgewählt ist aus:

   - wenn die gelösten Vorläufer keine Vorläufer der Seltenen Erden enthalten, einer der folgenden Einbringungsreihenfolgen: MBF, MFB, FMB, FBM, BMF oder BFM, vorzugsweise MBF oder MFB; oder

- wenn mindestens ein gelöster Vorläufer der Seltenen Erden in Schritt a0) erzeugt wird, einer der folgenden Einbringungsreihenfolgen:
MRFB, MRBF, MFRB, MFBR, MBFR, MBRF, RMFB, RMBF, RFMB, RFBM, RBFM, RBMF, BRFM, BRMF, BFMR, BFRM, BMFR, BMRF, FRBM, FRMB, FMRB, FMBR, FBRM oder FBMR, vorzugsweise MRBF, RMFB, FRBM, BFRM oder MBRF, noch bevorzugter MRBF oder RMFB;

mit:

- F als ein Vorläufer auf Eisenbasis,
- M als der oder die Metallvorläufer, der/die kein Vorläufer auf Eisenbasis ist/sind, und M ausgewählt aus Metallchloriden, Metallnitraten, Metallacetaten, Metallsulfaten und/oder aus den Vorläufern auf Kobalt-, Nickel-, Zink- und/oder Kupferbasis, vorzugsweise auf Kobaltbasis, noch bevorzugter als ein Kobaltchlorid;
- B als die Base(n);
- R als der oder die Vorläufer der Seltenen Erden;

b) hydrothermale und/oder solvothermale Herstellung;
so dass magnetische Nanoverbundwerkstoffe erhalten werden, die eine Hauptphase und eine oder mehrere sekundäre Phasen $M'_2(OH)_2O_2$ und/oder $R(OH)_3$ aufweisen, wobei die magnetischen Nanoverbundwerkstoffe eine gegebene magnetische Kategorie aufweisen, die von der gegebenen Reihenfolge des Einbringens der gelösten Vorläufer in Bezug auf die Base B in Schritt a) abhängt,
mit M'= Fe oder M
c) Schritt des Waschens der magnetischen Nanoverbundwerkstoffe.

2. Herstellungsverfahren nach Anspruch 1, wobei das Verfahren keinen Schritt des Kalzinierens der magnetischen Nanoverbundwerkstoffe aufweist.

3. Herstellungsverfahren nach einem der Ansprüche 1 bis 2, wobei in Schritt a0) die Behälter auf eine gegebene Temperatur unterhalb der Siedetemperatur des Lösungsmittels erhitzt werden und dann die Abkühlung auf Raumtemperatur abgewartet wird, bevor Schritt a) durchgeführt wird.

4. Herstellungsverfahren nach einem der Ansprüche 1 bis 3, wobei die ausgewählten magnetischen Nanoverbundwerkstoffe jeweils 85 bis 97 Ma% Hauptphase und jeweils 15 bis 3 Ma% sekundäre Phase aufweisen.

5. Herstellungsverfahren nach einem der Ansprüche 1 bis 4, wobei die Hauptphase ein Ferritspinell ist mit der Summenformel

$$Co_xNi_yZn_zCu_uMn_vAg_tFe_{2-w}R_wO_4,$$

mit

$$x+y+z+u+v+t=1$$

R: La, Ce, Pr, Nd, Pm, Sm, Eu, Gd, Tb, Dy, Ho, Er, Tm, Yb und Lu
w zwischen 0 und 2.

6. Herstellungsverfahren nach einem der Ansprüche 1 bis 5, wobei die hydrothermale und/oder solvothermale Herstellung bei einem Basizitätsgrad zwischen 0 und 100, vorzugsweise zwischen 5 und 25, besonders bevorzugt zwischen 6 und 8, durchgeführt wird.

7. Herstellungsverfahren nach einem der Ansprüche 1 bis 6, wobei der Vorläufer auf Eisenbasis und/oder mindestens ein anderer metallischer Vorläufer als der Vorläufer auf Eisenbasis in seiner/ihrer wasserfreien Form verwendet wird/werden.

8. Herstellungsverfahren nach einem der Ansprüche 1 bis 7, wobei der oder die Vorläufer der Seltenen Erden (R) aus Seltenerdchloriden, Seltenerdnitraten, Seltenerdacetaten, Seltenerdsulfaten und/oder aus Lanthan, Cerium, Praseodym, Neodym, Promethium, Samarium, Europium, Gadolinium, Terbium, Dysprosium, Holmium, Erbium, Thulium, Ytterbium, Lutetium, Scandium und Yttrium, vorzugsweise Praseodym, ausgewählt wird/werden.

9. Herstellungsverfahren nach einem der Ansprüche 1 bis 8, wobei in Schritt a0) unterschiedliche Konzentrationen der Vorläufer verwendet werden, um die magnetische Kategorie der magnetischen Nanoverbundwerkstoffe zu modulieren, wobei die magnetische Kategorie der magnetischen Nanoverbundwerkstoffe vorzugsweise weichmagnetischem Material oder halbhartmagnetischem Material oder hartmagnetischem Material entsprechen kann.

10. Magnetische Nanoverbundwerkstoffe, umfassend eine Hauptphase und eine oder mehrere sekundäre Phasen $M'_2(OH)_2O_2$ und/oder $R(OH)_3$, die gestatten, die magnetische Kategorie der magnetischen Nanoverbundwerkstoffe zu modulieren, wobei die magnetische Kategorie der magnetischen Nanoverbundwerkstoffe vorzugsweise weichmagnetischem Material oder halbhartmagnetischem Material oder hartmagnetischem Material entsprechen kann, mit:

- M'= Fe oder M,
- M ausgewählt aus Metallchloriden, Metallnitraten, Metallacetaten, Metallsulfaten und/oder aus den Vorläufern auf Kobalt-, Nickel-, Zink- und/oder Kupferbasis, vorzugsweise auf Kobaltbasis, noch bevorzugter als ein Kobaltchlorid
- R: La, Ce, Pr, Nd, Pm, Sm, Eu, Gd, Tb, Dy, Ho, Er, Tm, Yb und Lu;
die jeweils 85 bis 97 Ma% Hauptphase und jeweils 15 bis 3 Ma% sekundäre Phase aufweisen, die gestatten, die magnetische Kategorie der magnetischen Nanoverbundwerkstoffe zu modulieren,
und für die die Hauptphase Spinellferrit ist mit der Summenformel
$Co_xNi_yZn_zCu_uMn_vAg_tFe_{2-w}R_wO_4$ mit

$$x+y+z+u+v+t=1$$

R: La, Ce, Pr, Nd, Pm, Sm, Eu, Gd, Tb, Dy, Ho, Er, Tm, Yb und Lu
w zwischen 0 und 2.

11. Magnetische Nanoverbundwerkstoffe nach Anspruch 10 mit einem koerzitiven Koerzitivfeld zwischen 796 A/m und 1592 kA/m (10 Oe - 20 kOe), vorzugsweise zwischen 39,8 kA/m bis 796 kA/m (0,5 kOe - 10 kOe), vorzugsweise zwischen 397,9 kA/m bis 796 kA/m (5 kOe - 10 kOe) .

12. Magnetische Nanoverbundwerkstoffe nach einem der Ansprüche 10 und 11, aufweisend:

- ein Koerzitivfeld *(Hc)* über 397,9 kA/m, das der folgenden chemischen Formel entspricht: $MFe_{2-x}R_xO_4$ (M: Co und R: Pr; $0 \leq x \leq 0,2$) und vorzugsweise erhalten wird:

  - bei einem Basizitätsgrad, b, von gleich 7,
  - bei einem Hydrolysegrad, h, über 450,
  - ohne vorheriges Erhitzen der gelösten Vorläuferlösungen,
  - mit folgender Reihenfolge des Einbringens der Vorläufer in den Autoklav: MRBF (M: Co; B: NaOH; F: Fe; und R: Pr);

- ein Koerzitivfeld *(Hc)* über 238,7 kA/m, das der folgenden chemischen Formel entspricht: $MFe_{2-x}R_xO_4$ (M: Co und R: Pr; $0 \leq x \leq 0,2$) und vorzugsweise erhalten wird:

  - bei einem Basizitätsgrad von gleich 7,
  - bei einem Hydrolysegrad, h, über 450,
  - mit vorherigem Erhitzen, vorzugsweise auf 70 °C, der gelösten Vorläuferlösungen,
  - mit folgender Reihenfolge des Einbringens der Vorläufer in den Autoklav: MRBF (M: Co; B: NaOH; F: Fe; und R: Pr);

- ein Koerzitivfeld *(Hc)* unter 143,2 kA/m, das der folgenden chemischen Formel entspricht: $MFe_{2-x}R_xO_4$ (M: Co und R: Pr; $0 \leq x \leq 0,2$) und vorzugsweise erhalten wird:

  - bei einem Basizitätsgrad von gleich 7,
  - bei einem Hydrolysegrad, h, über 450,
  - mit vorherigem Erhitzen, vorzugsweise auf 70 °C, der gelösten Vorläuferlösungen,
  - mit folgender Reihenfolge des Einbringens der Vorläufer in den Autoklav: RMBF (M: Co; B: NaOH; F: Fe;

und R: Pr);

- ein Koerzitivfeld *(Hc)* über 437,7 kA/m, das der folgenden chemischen Formel entspricht: $MFe_{1,8}R_{0,2}O_4$ (M: Co und R: Pr) und vorzugsweise erhalten wird:

    • bei einem Basizitätsgrad von gleich 7,
    • bei einem Hydrolysegrad, h, über 450,
    • ohne vorheriges Erhitzen der gelösten Vorläuferlösungen,
    • mit folgender Reihenfolge des Einbringens der Vorläufer in den Autoklav: MRBF (M: Co; B: NaOH; F: Fe; und R: Pr);

- ein Koerzitivfeld *(Hc)* zwischen 413,8 und 429,7 kA/m ($FeCl_3.6H_2O$) oder jeweils zwischen 445,6 und 461,5 kA/m (wasserfreies $FeCl_3$), das der folgenden chemischen Formel entspricht: $MFe_{1,85}R_{0,15}O_4$ (M: Co und R: Pr) und vorzugsweise erhalten wird:

    • bei einem Basizitätsgrad von gleich 7,
    • bei einem Hydrolysegrad, h, über 450,
    • unter Verwendung von $FeCl_3.6H_2O$ oder jeweils von wasserfreiem $FeCl_3$,
    • ohne vorheriges Erhitzen der gelösten Vorläuferlösungen,
    • mit folgender Reihenfolge des Einbringens der Vorläufer: MRBF (M: Co; B: NaOH; F: Fe; und R: Pr);

- ein Koerzitivfeld *(Hc)* zwischen 525,2 kA/m und 541,1 kA/m (xPr=0,15) und zwischen 549,1 und 580,9 kA/m (xPr=0,30), das der folgenden chemischen Formel entspricht: $MFe_{2-x}R_xO_4$ (M: Co und R: Pr; x=0,15; und x=0,30) und vorzugsweise erhalten wird:

    • bei einem Basizitätsgrad von gleich 7,
    • bei einem Hydrolysegrad, h, über 450,
    • unter Verwendung von wasserfreiem FeCls,
    • mit folgender Reihenfolge des Einbringens der Vorläufer: MRBF (M: Co; B: NaOH; F: Fe; und R: Pr);
    • mit vorherigem Erhitzen, vorzugsweise auf 70 °C, der gelösten Vorläuferlösungen,

- ein Koerzitivfeld *(Hc)* zwischen 413,8 und 437,7 kA/m, das der folgenden chemischen Formel entspricht: $MFe_{1,85}R_{0,15}O_4$ (M: Co und R: Pr) und vorzugsweise erhalten wird:

    • bei einem Basizitätsgrad von gleich 7,
    • bei einem Hydrolysegrad, h, über 450,
    • unter Verwendung von wasserfreiem FeCls,
    • ohne vorheriges Erhitzen der gelösten Vorläuferlösungen,
    • mit folgender Reihenfolge des Einbringens der Vorläufer: MRBF (M: Co; B: NaOH; F: Fe; und R: Pr);

- ein Koerzitivfeld *(Hc)* zwischen 517,3 und 541,1 kA/m, das der folgenden chemischen Formel entspricht: $MFe_{1,85}R_{0,15}O_4$ (M: Co und R: Pr) und vorzugsweise erhalten wird:

    • bei einem Basizitätsgrad von gleich 7,
    • bei einem Hydrolysegrad, h, über 450,
    • unter Verwendung von wasserfreiem FeCls,
    • mit vorherigem Erhitzen, vorzugsweise auf 70 °C, der gelösten Vorläuferlösungen,
    • mit folgender Reihenfolge des Einbringens der Vorläufer: MRBF (M: Co; B: NaOH; F: Fe; und R: Pr);

- ein Koerzitivfeld *(Hc)* zwischen 43,8 und 51,7 kA/m (RFBM), zwischen 119,4 und 135,3 kA/m (RMBF), und zwischen 453,6 und 469,5 kA/m (MRBF), das der folgenden chemischen Formel entspricht: $MFe_{1,975}R_{0,025}O_4$ (M: Co und R: Pr) und vorzugsweise erhalten wird:

    • bei einem Basizitätsgrad von gleich 7,
    • bei einem Hydrolysegrad, h, über 450,
    • mit folgender Reihenfolge des Einbringens der Vorläufer: RFBM, RMFB oder MRBF (M: Co; B: NaOH; F: Fe; und R: Pr);
    • mit vorherigem Erhitzen, vorzugsweise auf 70 °C, der gelösten Vorläuferlösungen,

- ein Koerzitivfeld *(Hc)* zwischen 59,7 und 71,6 kA/m (MRBF) und zwischen 509,3 und 525,2 kA/m (MRBF), das der folgenden chemischen Formel entspricht: $MFe_{1,925}R_{0,075}O_4$ (M: Co und R: Pr) und vorzugsweise erhalten wird:

> • bei einem Basizitätsgrad von gleich 7,
> • bei einem Hydrolysegrad, h, über 450,
> • mit folgender Reihenfolge des Einbringens der Vorläufer: MRBF, RMFB, FRBM, BFRM oder MBRF (M: Co; B: NaOH; F: Fe; und R: Pr);
> • mit vorherigem Erhitzen, vorzugsweise auf 70 °C, der gelösten Vorläuferlösungen.

13. Verwendung der magnetischen Nanoverbundwerkstoffe nach einem der Ansprüche 10 bis 12 in einem Ferrofluid, einem magnetrheologischen Fluid, einer elektromagnetischen Abschirmung und/oder zur Behandlung von Wasser oder Böden.

## Claims

1. A method for producing iron oxide-based magnetic nanocomposites, said magnetic nanocomposites having a given magnet grade, the given magnet grade being for example selected from among a soft magnetic material, or a semi-hard magnetic material, or a hard magnetic material, said method comprising the following steps:

> a0) separate dissolutions of:
>
> > - an iron-based precursor (F) in an aqueous solvent and/or an organic solvent in a first container,
> > - at least one metal precursor (M) other than an iron-based precursor in a second solvent in a second container,
> > - optionally, at least one rare-earth precursor (R),
> > - a base (B) in a solvent in a third container;
>
> a) introduction at room temperature of the dissolved iron-based precursor (F) and of the at least one metal precursor (M) other than a dissolved iron-based precursor, of at the least one dissolved base (B), and, optionally, of at least one dissolved rare-earth precursor (R), in a given order of introduction into an autoclave, the combination of these dissolved precursors with the base (B) resulting in a coprecipitation of said precursors, the order of introduction of the dissolved base (B) into the autoclave with regards to the introductions of the dissolved precursors allowing obtaining different precipitates, the given order of introduction, in step a), of the solutions of step a0) into the autoclave is selected:
>
> > - when the dissolved precursors do not include a rare-earth precursor, from among one of the following orders of introduction: MBF, MFB, FMB, FBM, BMF, or BFM, preferably MBF or MFB;
> > Or
> > - when at least one dissolved rare-earth precursor is generated in step a0), from among one of the following orders of introduction:
> > MRFB, MRBF, MFRB, MFBR, MBFR, MBRF, RMFB, RMBF, RFMB, RFBM, RBFM, RBMF, BRFM, BRMF, BFMR, BFRM, BMFR, BMRF, FRBM, FRMB, FMRB, FMBR, FBRM, or FBMR, preferably MRBF, RMFB, FRBM, BFRM, or MBRF, more preferably MRBF or RMFB;
>
> With:
>
> > - F is an iron-based precursor,
> > - M is the metal precursor(s) other than an iron-based precursor, and M is selected from among metal chlorides, metal nitrates, metal acetates, metal sulphates, and/or from among cobalt-, nickel-, zinc-, and/or copper-based precursors, preferably cobalt-based, more preferably a cobalt chloride;
> > - B is the base(s);
> > - R is the rare-earth precursor(s);
>
> b) hydrothermal and/or solvothermal production;
> so as to obtain magnetic nanocomposites which have a main phase and one or more secondary phase(s) $M'_2(OH)_2O_2$ and/or $R(OH)_3$, said magnetic nanocomposites having a given magnet grade which depends on the given order of introduction of the dissolved precursors with regards to the base B in step a),
with M' = Fe or M
c) a step of washing the magnetic nanocomposites.

2. The production method according to claim 1, wherein the method does not include a step of calcining the magnetic nanocomposites.

3. The production method according to one of claims 1 to 2, wherein, in step a0), the containers are heated up to a given temperature lower than the boiling point of the solvent, and then allowed to cool down to room temperature before carrying out step a).

4. The production method according to one of claims 1 to 3, wherein the selected magnetic nanocomposites respectively have from 85% by weight to 97% by weight of the main phase and from 15% by weight to 3% by weight of the secondary phase.

5. The production method according to one of claims 1 to 4, wherein the main phase is a spinel ferrite of the molecular formula

$$Co_xNi_yZn_zCu_uMn_vAg_tFe_{2-w}R_wO_4,$$

with

$$x+y+z+u+v+t=1$$

R: La, Ce, Pr, Nd, Pm, Sm, Eu, Gd, Tb, Dy, Ho, Er, Tm, Yb, and Lu
w comprised between 0 and 2.

6. The production method according to one of claims 1 to 5, wherein the hydrothermal and/or solvothermal production is carried out at an alkalinity level comprised between 0 and 100, preferably between 5 and 25, more preferably between 6 and 8.

7. The production method according to one of claims 1 to 6, wherein the iron-based precursor and/or at least one metal precursor other than the iron-based precursor is/are used in its/their anhydrous form.

8. The production method according to any one of claims 1 to 7, wherein the rare-earth precursor(s) (R) is/are selected from among rare-earth chlorides, rare-earth nitrates, rare-earth acetates, rare-earth sulphates and/or from among lanthanum, cerium, praseodymium, neodymium, promethium, samarium, europium, gadolinium, terbium, dysprosium, holmium, erbium, thulium, ytterbium, lutetium, scandium, and yttrium, preferably praseodymium.

9. The production method according to any one of claims 1 to 8, wherein different concentrations of the precursors are used in step a0) to modulate the magnet grade of the magnetic nanocomposites, the magnet grade of the magnetic nanocomposites could preferably correspond to: a soft magnetic material, or a semi-hard magnetic material, or a hard magnetic material.

10. Magnetic nanocomposites comprising said main phase and one or more secondary phase(s) $M'_2(OH)_2O_2$, and/or R(OH)s which allow modulating the magnet grade of the magnetic nanocomposites, the magnet grade of the magnetic nanocomposites could preferably correspond to: a soft magnetic material, or a semi-hard magnetic material, or a hard magnetic material,
With:

• M' = Fe or M,
• M selected from among metal chlorides, metal nitrates, metal acetates, metal sulphates and/or from among cobalt-, nickel-, zinc-, and/or copper-based precursors, preferably cobalt-based precursors, more preferably a cobalt chloride;
• R: La, Ce, Pr, Nd, Pm, Sm, Eu, Gd, Tb, Dy, Ho, Er, Tm, Yb, and Lu;
which respectively have from 85% by weight to 97% by weight of the main phase and respectively from 15% by weight to 3% by weight of the secondary phase allowing modulating the magnet grade of the magnetic nanocomposites,

and for which the main phase is spinel ferrite of the molecular formula $Co_xNi_yZn_zCu_uMn_vAg_tFe_{2-w}R_wO_4$ with:

$$x+y+z+u+v+t=1$$

R: La, Ce, Pr, Nd, Pm, Sm, Eu, Gd, Tb, Dy, Ho, Er, Tm, Yb, and Lu

w comprised between 0 and 2.

11. The magnetic nanocomposites according to claim 10, having a coercive field comprised between 796 A/m and 1,592 kA/m (10 Oe - 20 kOe), preferably between 39.8 kA/m to 796 kA/m (0.5 kOe - 10 kOe), preferably between 397.9 kA/m to 796 kA/m (5 kOe - 10 kOe).

12. The magnetic nanocomposites according to one of claims 10 and 11, having:

- a coercive field (He) higher than 397.9 kA/m which corresponds to the following chemical formula: $MFe_{2-x}R_xO_4$ (M: Co and R: Pr; $0 \leq x \leq 0.2$) and is preferably obtained:

   • at an alkalinity level, b, equal to 7,
   • at a hydrolysis level, h, higher than 450,
   • without prior heating of the dissolved precursor solutions,
   • with the following order of introduction of the precursors into the autoclave: MRBF (M: Co; B: NaOH; F: Fe; and R: Pr);

- a coercive field (He) higher than 238.7 kA/m which corresponds to the following chemical formula: $MFe_{2-x}R_xO_4$ (M: Co and R: Pr; $0 \leq x \leq 0.2$) and is preferably obtained:

   • at an alkalinity level equal to 7,
   • at a hydrolysis level, h, higher than 450,
   • with a prior heating, preferably up to 70°C, of the dissolved precursor solutions,
   • with the following order of introduction of the precursors into the autoclave: MRBF (M: Co; B: NaOH; F: Fe; and R: Pr);

- a coercive field (He) lower than 143.2 kA/m which corresponds to the following chemical formula: $MFe_{2-x}R_xO_4$ (M: Co and R: Pr; $0 \leq x \leq 0.1$) and is preferably obtained:

   • at an alkalinity level equal to 7,
   • at a hydrolysis level, h, higher than 450,
   • with a prior heating, preferably up to 70°C, of the dissolved precursor solutions,
   • with the following order of introduction of the precursors into the autoclave: RMBF (M: Co; B: NaOH; F: Fe; and R: Pr);

- a coercive field (He) higher than 437.7 kA/m which corresponds to the following chemical formula: $MFe_{1.8}R_{0.2}O_4$ (M: Co and R: Pr) and is preferably obtained:

   • at an alkalinity level equal to 7,
   • at a hydrolysis level, h, higher than 450,
   • without prior heating of the dissolved precursor solutions,
   • with the following order of introduction of the precursors: MRBF (M: Co; B: NaOH; F: Fe; and R: Pr);

- a coercive field (He) between 413.8 and 429.7 kA/m ($FeCl_3.6H_2O$) or respectively between 445.6 and 461.5 kA/m (anhydrous $FeCl_3$), which corresponds to the following chemical formula: $MF_{1.85}R_{0.15}O_4$ (M: Co and R: Pr) and is preferably obtained:

   • at an alkalinity level equal to 7,
   • at a hydrolysis level, h, higher than 450,
   • using $FeCl_3.6H_2O$ or anhydrous $FeCl_3$, respectively,
   • without prior heating of the dissolved precursor solutions,

• with the following order of introduction of the precursors: MRBF (M: Co; B: NaOH; F: Fe; and R: Pr);

- a coercive field (He) comprised between 525.2 kA/m and 541.1 kA/m (xPr=0.15) and comprised between 549.1 kA/m and 580.9 kA/m (xPr=0.30) which corresponds to the following chemical formula: $MFe_{2-x}R_xO_4$ (M: Co and R: Pr; x=0.15; and x=0.30) and is preferably obtained:

    • at an alkalinity level equal to 7,
    • at a hydrolysis level, h, higher than 450,
    • with the use of anhydrous $FeCl_3$,
    • with the following order of introduction of the precursors: MRBF (M: Co; B: NaOH; F: Fe; and R: Pr),
    • with a prior heating, preferably up to 70°C, of the dissolved precursor solutions;

- a coercive field (He) comprised between 413.8 and 437.7 kA/m which corresponds to the following chemical formula: $MFe_{1.85}R_{0.15}O_4$ (M: Co and R: Pr) and is preferably obtained:

    • at an alkalinity level equal to 7,
    • at a hydrolysis level, h, higher than 450,
    • with the use of anhydrous $FeCl_3$,
    • without prior heating of the dissolved precursor solutions,
    • with the following order of introduction of the precursors: MRBF (M: Co; B: NaOH; F: Fe; and R: Pr);

- a coercive field (He) comprised between 517.3 and 541.1 kA/m which corresponds to the following chemical formula: $MFe_{1.85}R_{0.15}O_4$ (M: Co and R: Pr) and is preferably obtained:

    • at an alkalinity level equal to 7,
    • at a hydrolysis level, h, higher than 450,
    • with the use of anhydrous FeCls,
    • with a prior heating, preferably up to 70°C, of the dissolved precursor solutions,
    • with the following order of introduction of the precursors: MRBF (M: Co; B: NaOH; F: Fe; and R: Pr);

- a coercive field (He) comprised between 43.8 kA/m and 51.7 kA/m (RFBM), comprised between 119.4 kA/m and 135.3 kA/m (RMFB), and comprised between 453.6 kA/m and 469.5 kA/m (MRBF) which corresponds to the following chemical formula: $MFe_{1.975}R_{0.025}O_4$ (M: Co and R: Pr) and is preferably obtained:

    • at an alkalinity level equal to 7,
    • at a hydrolysis level, h, higher than 450,
    • with the following order of introduction of the precursors: RFBM, RMFB, or MRBF (M: Co; B: NaOH; F: Fe; and R: Pr),
    • with a prior heating, preferably up to 70°C, of the dissolved precursor solutions;
    or,

- a coercive field (He) comprised between 59.7 kA/m and 71.6 kA/m (MRBF) and comprised between 509.3 kA/m and 525.2 kA/m (MRBF) which corresponds to the following chemical formula: $MFe_{1.925}R_{0.075}O_4$ (M: Co and R: Pr) and is preferably obtained:

    • at an alkalinity level of 7,
    • at a hydrolysis level, h, higher than 450,
    • with the following orders of introduction of the precursors: MRBF, RMFB, FRBM, BFRM, or MBRF (M: Co; B: NaOH; F: Fe; and R: Pr),
    • with a prior heating, preferably up to 70°C, of the dissolved precursor solutions.

13. A use of the magnetic nanocomposites according to one of claims 10 to 12, in a ferrofluid, a magnetorheological fluid, an electromagnetic shield, and/or for treating waters or soils.

FIGURE 1A

298 K

FIGURE 1B

FIGURE 2

298 K

FIGURE 3A

FIGURE 3B

FIGURE 4A

298 K

FIGURE 4B

FIGURE 5A

298 K

FIGURE 5B

298 K

FIGURE 6A

298 K

FIGURE 6B

$CoFe_{1,975}Pr_{0,025}O_4$ (298 K)

FIGURE 7A

FIGURE 7B

## RÉFÉRENCES CITÉES DANS LA DESCRIPTION

**Littérature non-brevet citée dans la description**

- **WU et al.** *Acta Biomaterialia,* 2011, vol. 7, 3496-3504
- **MA et al.** *Materials Research Bulletin,* 2013, vol. 48, 214-217
- **M. P. REDDY et al.** *Journal of Magnetism and Magnetic Materials,* 2015, vol. 388, 40-44
- **S. BRICENO et al.** *Materials Science and Engineering C,* 2017, vol. 78, 842-846

- **JOVANOVIC et al.** pH control of magnetic properties in precipitation-hydrothermal-derived CoFe2O4. *JOURNAL OF ALLOYS AND COMPOUNDS,* 04 Décembre 2013, vol. 589, 271-277
- **HUSSAIN et al.** Dielectric and magnetic properties of cobalt doped-FeOnanoparticles. *JOURNAL OF MATERIALS SCIENCE: MATERIALS IN ELECTRONICS,* 26 Juin 2019, vol. 30 (14), 13698-13707